(19) **Europäisches Patentamt**
**European Patent Office**
**Office européen des brevets**

(11) **EP 4 636 698 A1**

(12) **EUROPEAN PATENT APPLICATION**

(43) Date of publication:
**22.10.2025 Bulletin 2025/43**

(21) Application number: **25171356.6**

(22) Date of filing: **17.04.2025**

(51) International Patent Classification (IPC):
**G06T 9/00** (2006.01)       **H04N 19/52** (2014.01)
**H04N 19/70** (2014.01)

(52) Cooperative Patent Classification (CPC):
**G06T 9/001; G06T 9/004; H04N 19/52;**
**H04N 19/70;** H04N 19/597

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **19.04.2024 US 202463636583 P**
**19.04.2024 US 202463636589 P**
**16.04.2025 US 202519180709**

(71) Applicant: **Apple Inc.**
**Cupertino, CA 95014 (US)**

(72) Inventors:
• **KIM, Jungsun**
**Cupertino, 95014 (US)**
• **TOURAPIS, Alexandros**
**Cupertino, 95014 (US)**

(74) Representative: **Bateman, Samuel Alec**
**Withers & Rogers LLP**
**2 London Bridge**
**London SE1 9RA (GB)**

(54) **INTER-PREDICTION FOR DYNAMIC MESH CODING**

(57) A system comprises an encoder configured to compress and encode data for a three-dimensional mesh. To compress the three-dimensional mesh, the encoder predicts, for a current frame of a three-dimensional mesh, vertex values of the current frame using location information from one or more preceding frames or using multiple vertex values from a single frame. Predictors and residuals for determining the current frame may be signaled in a bitstream to a decoder to decompress the three-dimensional mesh.

*FIG. 4*

**Description**

**BACKGROUND**

Priority Claim

This application claims benefit of priority to U.S. Provisional Application Serial No. 63/636,583, entitled "Multi-Hypothesis Inter-Prediction for Dynamic Mesh Coding," filed April 19, 2024, and claims benefit of priority to U.S. Provisional Application Serial No. 63/636,589, entitled "Parameter Signaling for Attribute and Geometry Encoding Parameters for Dynamic Meshes," filed on April 19, 2024, both of which are incorporated herein by reference in their entireties.

Technical Field

This disclosure relates generally to compression and decompression of three-dimensional meshes with associated textures or attributes.

Description of the Related Art

Various types of sensors, such as light detection and ranging (LIDAR) systems, 3-D cameras, 3-D scanners, etc. may capture data indicating positions of points in three-dimensional space, for example positions in the X, Y, and Z planes. Also, such systems may further capture attribute information in addition to spatial information for the respective points, such as color information (e.g., RGB values), texture information, intensity attributes, reflectivity attributes, motion related attributes, modality attributes, or various other attributes. In some circumstances, additional attributes may be assigned to the respective points, such as a timestamp when the point was captured. Points captured by such sensors may make up a "point cloud" comprising a set of points each having associated spatial information and one or more associated attributes. In some circumstances, a point cloud may include thousands of points, hundreds of thousands of points, millions of points, or even more points. Also, in some circumstances, point clouds may be generated, for example in software, as opposed to being captured by one or more sensors. In either case, such point clouds may include large amounts of data and may be costly and time-consuming to store and transmit. Also, three-dimensional visual content may also be captured in other ways, such as via 2D images of a scene captured from multiple viewing positions relative to the scene.

Such three-dimensional visual content may be represented by a three-dimensional mesh comprising a plurality of polygons with connected vertices that models a surface of three-dimensional visual content, such as a surface of a point cloud. Moreover, texture or attribute values of points of the three-dimensional visual content may be overlaid on the mesh to represent the attribute or texture of the three-dimensional visual content when modelled as a three-dimensional mesh.

Additionally, a three-dimensional mesh may be generated, for example in software, without first being modelled as a point cloud or other type of three-dimensional visual content. For example, the software may directly generate the three-dimensional mesh and apply texture or attribute values to represent an object.

**SUMMARY OF EMBODIMENTS**

In some embodiments, a system includes one or more sensors configured to capture points representing an object in a view of the sensor and to capture texture or attribute values associated with the points of the object. The system also includes one or more computing devices storing program instructions, that when executed, cause the one or more computing devices to generate a three-dimensional mesh that models the points of the object using vertices and connections between the vertices that define polygons of the three-dimensional mesh. Also, in some embodiments, a three-dimensional mesh may be generated without first being captured by one or more sensors. For example, a computer graphics program may generate a three-dimensional mesh with an associated texture or associated attribute values to represent an object in a scene, without necessarily generating a point cloud that represents the object.

In some embodiments, an encoder/decoder system includes one or more computing devices storing program instructions that when executed by the one or more computing devices, further cause the one or more computing devices to compress/decompress a version of a three-dimensional mesh using inter prediction. In inter-prediction, one or more frames of three-dimensional meshes are encoded/decoded by predicting their content from previously decoded frames, wherein each frame represents a three-dimensional mesh at a particular frame index. Note that in some embodiments, inter-prediction may be performed on only a part of a mesh, such as a sub-mesh, and also references used in inter-prediction which reference previously decoded frames, may reference only a portion of a mesh in the previously decoded frame, such as a sub-mesh. Thus, in some embodiments, different prediction techniques may be used for different sub-meshes of a same overall mesh, and also references to previously decoded frames may vary at a sub-mesh level. More generally, in inter-prediction, one or more vertices are used to predict a vertex. For example, vertices from one or more reference frames may be used to predict a vertex value for a current frame and/or multiple different vertices in a given reference frame may be used to predict a vertex value for a current frame. In some embodiments, in contrast to general inter-prediction, multi-hypothesis inter-prediction may be used, which uses location information for more than one reference vertex to predict a vertex position of a vertex whose position is being predicted via the multi-hypothesis inter-prediction. For example, similarly situated vertices in two or more previously decoded frames may be used to predict a vertex location of a vertex in another frame that is being decoded. Said another way, a displacement vector that is to be applied at a subdivision location of a base mesh (e.g. vertex information that when applied results in defining a vertex postition) may be predicted using inter-prediction or multi-hypothesis inter-prediction. As another example, vertex information associated with two or more vertices in a single reference frame may be used to predict a vertex location of a vertex in another frame that is being decoded. Likewise, various combinations of vertices in multiple previously decoded frames may be used as predictors for a function that predicts a vertex location of a vertex in a frame being decoded.

In some embodiments, vertex positions and other attributes of the three-dimensional mesh in a frame being decoded/reconstructed may be signaled using a compressed bitstream that leverages information already provided in previously decoded frames using inter-prediction. Inter-prediction allows compression by exploiting temporal redundancies between previously decoded frames of the three-dimensional mesh and the frame currently being decoded. For example, instead of encoding each frame independently, inter-prediction may be used to predict content of a given frame (such as the frame currently being decoded) based on previously encoded information associated with other frames, wherein that previously encoded information has been decoded at the decoder and is available for use by the decoder when performing inter-prediction with regard to the given frame. This reduces the amount of information that needs to be transmitted to a decoder by exploiting common relationships that exist across the frames (e.g. one or more previously decoded frames that are used as references in decoding a frame currently being decoded). Additionally, the bitstream may signal differences (e.g., residuals) between predicted values (such as predicted vertex values) for the predicted frame and corresponding values (such as vertex values) for the original frame (e.g. a frame of the dynamic mesh that is being encoded/compressed), and in such circumstances, it is not necessary to signal the entire set of geometry and/or attribute information for the three-dimensional mesh of the given frame (e.g. frame currently being decoded using inter-prediction), because that frame's information is signaled in a way that leverages information from the reference frames.

In some embodiments, an inter-prediction technique used in compression of the three-dimensional mesh uses multiple vertices from multiple frames at different frame indices, or multiple vertices from a single frame at a single frame index. In some embodiments, a single vertex may be selected respectively from each of multiple frames at different frame indices as well as multiple vertices selected from another frame to predict geometry information for a current frame. In some embodiments, vertices for a given frame may be determined by averaging of the values of vertices having the same index position in multiple different reference frames. In another example, multiple vertices having different index positions in a single reference frame may be used to predict a vertex value for a vertex for a given frame (such as the frame currently being encoded/decoded). The inter-prediction technique may furthermore be used to encode vertices connectivity for vertices of a given frame (such as the frame currently being encoded/decoded), wherein the vertices connectivity is determined based on vertices connectivities used in one or more reference frames. In some embodiments, one or more predictors (e.g., the input values to the prediction process, such as a combination of specified values or previously decoded data (e.g., vertex values)) (may themselves be generated using other predictors that were used as predictors for another frame having another frame index value. For example, in inter-prediction, multiple predictors can be combined together in various functions that use the different predictors differently. Also, predictor weights can be applied to each predictor, for example differently. As an example, in a first given frame vertices values from two previously decoded frames may be used as predictors in a function that predicts a set of vertex values for the first given frame. However, for a second given frame the previously used predictors (e.g. vertices values from the two previously decoded frames) may be used along with an additional predictor, such as a vertex value predicted for the first given frame in a function that predicts a set of vertex values for the second given frame. Similarly, in some embodiments, a residual for a second given frame vertex value may be predicted using residuals for vertex values signaled for other frames such as a first given frame or a set of previously signaled frames. In some embodiments, the inter-prediction technique comprises using a function that takes vertex values from reference frames as inputs. For example, a function used to predict a vertex value for a given frame may be a function indicating differing weights to be applied to different vertices values (e.g. predictors) from one or more previously decoded frames. In some embodiments, the differing weights may be based on temporal distance between the given frame and the previously decoded frames. Note that the previously decoded frames are not required to be sequential frames, and in some embodiments, may even be frames that occur later in time than the frame for which vertices values are currently being predicted.

The indices of a reference frame can be signaled in the bitstream. Also, the indices of vertices used when referencing a reference frame may be different than the indices of vertices that was signaled when signaling the encoded representation of the reference frame. For example, for simplicity consider a reference frame comprising vertices A, B, and C. The encoded version of the reference frame may place vertex A in the 1st index position, vertex B in the second index position, and vertex C in the third index position. However, a different index may be used when referencing this reference frame as a previously decoded frame. For example, a second indexing used for referencing vertices of the reference frame may place vertex B in 1st index position, vertex A in the second index position, and vertex C in the third index position. Re-ordering the reference index vertices positions in this way may allow for vertices values that are more frequently referenced to be placed in lower index positions (e.g. at the top of the list), which may improve compression efficiency with regard to signaling predictors (e.g. index values of vertices of previously decoded frames that are used as predictors to predict a vertex value of another frame). The reference frame index can be signaled per frame or per vertex. For example, the same reference frame indexing order may be used for all predictors of a current frame being encoded/decoded, or alternatively multiple indices may be kept in memory (e.g. multiple orderings of the vertices of the reference frame) and for a given vertex the reference index and position within that index that is to be used to locate a predictor may be signaled. Also, reference indices may be signaled in a sequence parameter set and a frame parameter set, wherein the frame parameter set indicates variances from the definitions indicated in the sequence parameter set, e.g. that are to be applied only for a particular frame. In some embodiments, instead of signaling such items directly, they may be signaled as a difference (or relative addition). For example, the difference between the index of the current vertex and the index of the reference vertex can be signaled (e.g. if the reference vertex position is 3 and the vertex position that uses that reference vertex as a predictor is position 2, the reference vertex position may be signaled as +1 (e.g. the difference between the position in the current frame index and the reference frame index). In some embodiments, the reference vertex index position is assumed to be always smaller than the current vertex index, therefore the difference is always subtracted from the current vertex index.

In some embodiments, a manner of selecting predictors and/or functions that use the predictors to predict vertices value can be signaled at least partially at a higher level than an individual vertex, such as at a group of vertices-level, wherein the group of vertices use similar information related to inter-prediction. In some embodiments, the reference indices to be used in referencing predictors can be signaled per group. For example, where an additional re-ordered index for a given reference frame is to be used, such a re-ordered index can be signaled to be applicable for a group of frames, or a group of vertices. In some embodiment the difference from the current vertex and the reference vertex can be signaled per group, for example an offset or difference value to be applied to an index position of a vertex being predicted to locate a vertex value of a predictor in a reference frame can be signaled in a way that the same offset is used for predicting multiple vertices values for a group of vertices. Also, a type of function to be used (e.g. the function that accepts the predictors as inputs) such as bi-prediction or uni-prediction can be signaled per group of vertices.

In some embodiments, multiple attributes of the three-dimensional mesh (e.g., texture coordinates or texture connectivity) from one or more frames may be used to determine an attribute value for a given frame being encoded (or decoded). For example, a texture coordinate for a current frame may be determined by taking an average of texture coordinates having the same index position from multiple different previously decoded frames (or multiple texture coordinates in different index positions of a single frame). In some embodiments, a mesh connectivity, texture coordinates, or texture connectivity for a current frame may be determined based on a preestablished rule, wherein the preestablished rule may indicate the current frame is to use mesh connectivity, texture coordinates, or texture connectivity of a frame that is spatially or temporally closest to the current frame. Because the current mesh may have correlation with more than one previously decoded frames (or have correlation with more than one component of a previously decoded frame), exploiting such correlation using multi-hypothesis inter-prediction may result in improved predictions that allows significantly reduced amounts of data to be used to communicate three-dimensional mesh data while maintaining reconstruction fidelity.

In some embodiments, a mesh in a point-in-time frame may be segmented into multiple "sub-meshes" and the respective sub-meshes may be signaled in at least partially independent manner. For example, a given sub-mesh of point in time frame may be signaled using an inter-prediction technique while another sub-mesh of the same mesh for the same point-in-time frame may be signaled using a different prediction technique, such as intra-prediction. In some circumstances, there may be a different number of sub-meshes signaled in the respective sub-bitstreams for a given point-in-time frame. For example, if inter prediction is being used for sub-mesh "A" of point in time frame 2, but intra-prediction is being used for sub-mesh "B" of point in time frame 2, a base mesh may be signaled for sub-mesh "B" but not for sub-mesh "A" as sub-mesh "A" may predict vertices locations relative to reconstructed sub-mesh "A" of point in time frame 1, without a need for signaling an additional base mesh for sub-mesh "A" at point in time frame 2. However, the atlas sub-bitstream and/or the displacement sub-bitstream may include entries for both sub-meshes for both point-in-time frames. In some embodiments, in order to keep the respective sub-bitstreams aligned, an empty sub-mesh for a given sub-bitstream may be generated in reconstruction. As another example, a sub-mesh referenced in the atlas sub-bitstream that is not referenced in the base-mesh sub-bitstream may be removed from the atlas sub-bitstream. In such a case, when inter-prediction is used, the predicted point-in-time version of the sub-mesh may re-use atlas information from the reference frame (and/or predict it), such that the atlas information in the atlas sub-bitstream for that sub-mesh of that point-in time frame may be removed from the atlas sub-bitstream.

In some embodiments, residual information for adjusting predicted vertices information is signaled using a video encoder, wherein vertices residuals are grouped into patches, and the patches are packed into a two-dimensional (2D) video image frame. The atlas sub-bitstream maps vertices to subdivision location and/or to locations in three-dimensional (3D) space. However, when patches are used, it may further be necessary to signal the number of vertices for which residual information is ended in each respective packed patch. Thus, a nominal vertex count may be signaled per patch.

## BRIEF DESCRIPTION OF THE DRAWINGS

FIG. 1 illustrates example input information for defining a three-dimensional mesh, according to some embodiments.

FIG. 2 illustrates an alternative example of input information for defining a three-dimensional mesh, wherein the input information is formatted according to an object format, according to some embodiments.

FIG. 3 illustrates a multiple reference frame inter-prediction for geometry information of a three-dimensional mesh, according to some embodiments.

FIG. 4 illustrates a single reference frame, inter-prediction for geometry information of a three-dimensional mesh, according to some embodiments.

FIG. 5 illustrates inter-prediction using more than two reference frames for geometry information of a three-dimensional mesh, according to some embodiments.

FIG. 6 illustrates a non-sequential/out-of-order, multiple reference frame inter-prediction for geometry information of a three-dimensional mesh, according to some embodiments.

FIG. 7 illustrates an inter-prediction process for texture coordinates of a three-dimensional mesh, according to some embodiments.

FIG. 8 illustrates an inter-prediction process for connectivity information of a three-dimensional mesh, according to some embodiments.

FIG. 9 illustrates offsets to adjust a three-dimensional mesh in relation to an origin used for encoding as compared to an origin for an actual three-dimensional space within which the three-dimensional mesh resides, for example to conserve bit depth, according to some embodiments.

FIG. 10 illustrates different types of prediction related information that may be signaled for mesh attributes, according to some embodiments.

FIGs. 11A-11B illustrate example signaling and locating of a tile and patch bounding box, according to some embodiments.

FIG. 12 illustrates an example signaling and locating of a patch where more than one are is signaled for the patch, according to some embodiments.

FIG. 13 illustrates example mappings between texture coordinates and image pixel coordinates, according to some embodiments.

FIG. 14 illustrates an example intra-frame encoder, according to some embodiments.

FIG. 15 illustrates an example intra-frame decoder for decoding a three-dimensional mesh, according to some embodiments.

FIG. 16 illustrates an example inter-frame encoder, according to some embodiments.

FIG. 17 illustrates an example inter-frame decoder for decoding a three-dimensional mesh, according to some embodiments.

FIG. 18 illustrates an example multi-hypothesis inter-frame encoder, according to some embodiments.

FIG. 19 illustrates an example multi-hypothesis decoder for decoding a three-dimensional mesh, according to some embodiments.

FIG. 20 is a flow diagram illustrating an example process of reconstructing a dynamic mesh using inter-prediction, according to some embodiments.

FIG. 21 is a flow diagram illustrating an example process of reconstructing a dynamic mesh, wherein at least some sub-meshes have base meshes omitted from the base mesh sub-bitstream for at least some point-in-time frames, according to some embodiments.

FIG. 22 is a flow diagram illustrating an example process of reconstructing a dynamic mesh, wherein vertices counts are signaled per patch, according to some embodiments.

FIG. 23 illustrates an example computer system that may implement an encoder or decoder, according to some embodiments.

This specification includes references to "one embodiment" or "an embodiment." The appearances of the phrases "in one embodiment" or "in an embodiment" do not necessarily refer to the same embodiment. Particular features, structures, or characteristics may be combined in any suitable manner consistent with this disclosure.

"Comprising." This term is open-ended. As used in the appended claims, this term does not foreclose additional structure or steps. Consider a claim that recites: "An apparatus comprising one or more processor units ...." Such a claim does not foreclose the apparatus from including additional components (e.g., a network interface unit, graphics circuitry, etc.).

"Configured To." Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware-for example, circuits, memory storing program instructions executable to implement the operation, etc. Reciting that a unit/circuit/component is "configured to" perform one or more tasks is expressly intended not to invoke 35 U.S.C. § 112(f), for that unit/circuit/component. Additionally, "configured to" can include generic structure (e.g., generic circuitry) that is manipulated by software and/or firmware (e.g., an FPGA or a general-purpose processor executing software) to operate in manner that is capable of performing the task(s) at issue. "Configure to" may also include adapting a manufacturing process (e.g., a semiconductor fabrication facility) to fabricate devices (e.g., integrated circuits) that are adapted to implement or perform one or more tasks.

"First," "Second," etc. As used herein, these terms are used as labels for nouns that they precede, and do not imply any type of ordering (e.g., spatial, temporal, logical, etc.). For example, a buffer circuit may be described herein as performing write operations for "first" and "second" values. The terms "first" and "second" do not necessarily imply that the first value must be written before the second value.

"Based On." As used herein, this term is used to describe one or more factors that affect a determination. This term does not foreclose additional factors that may affect a determination. That is, a determination may be solely based on those factors or based, at least in part, on those factors. Consider the phrase "determine A based on B." While in this case, B is a factor that affects the determination of A, such a phrase does not foreclose the determination of A from also being based on C. In other instances, A may be determined based solely on B.

## DETAILED DESCRIPTION

As data acquisition and display technologies have become more advanced, the ability to capture volumetric content comprising thousands or millions of points in two-dimensional (2D) or three-dimensional (3D) space, such as via LIDAR systems, has increased. Also, the development of advanced display technologies, such as virtual reality or augmented reality systems, has increased potential uses for volumetric content. However, volumetric content files are often very large and may be costly and time-consuming to store and transmit. For example, communication of volumetric content over private or public networks, such as the Internet, may require considerable amounts of time and/or network resources, such that some uses of volumetric content, such as real-time uses, may be limited. Also, storage requirements of volumetric content files may consume a significant amount of storage capacity of devices storing the volumetric content files, which may also limit potential applications for using volumetric content data.

In some embodiments, an encoder may be used to generate compressed volumetric content to reduce costs and time associated with storing and transmitting large volumetric content files. In some embodiments, a system may include an encoder that compresses attribute and/or spatial information of volumetric content such that the volumetric content file may be stored and transmitted more quickly than non-compressed volumetric content and in a manner that the volumetric content file may occupy less storage space than non-compressed volumetric content.

In some embodiments, such encoders and decoders or other encoders and decoders described herein may be adapted to additionally or alternatively encode three-degree of freedom plus (3DOF+) scenes, visual volumetric content, such as MPEG V3C scenes, immersive video scenes, such as MPEG MIV, etc.

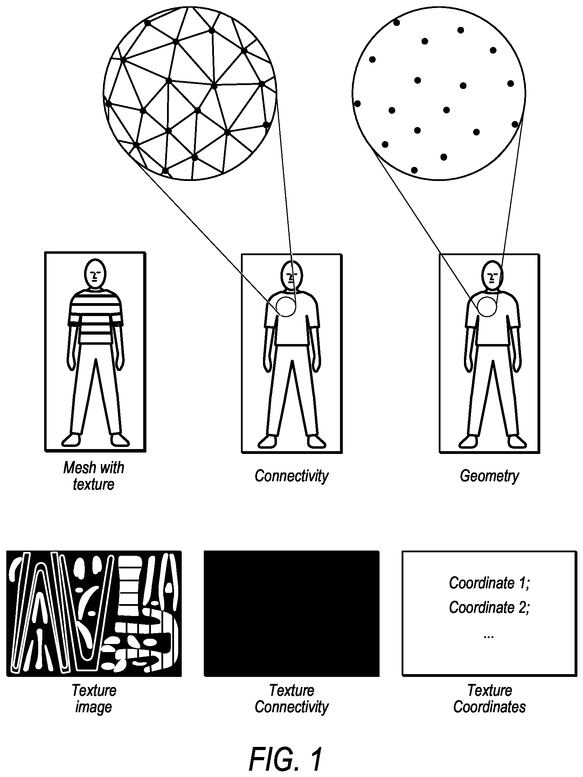

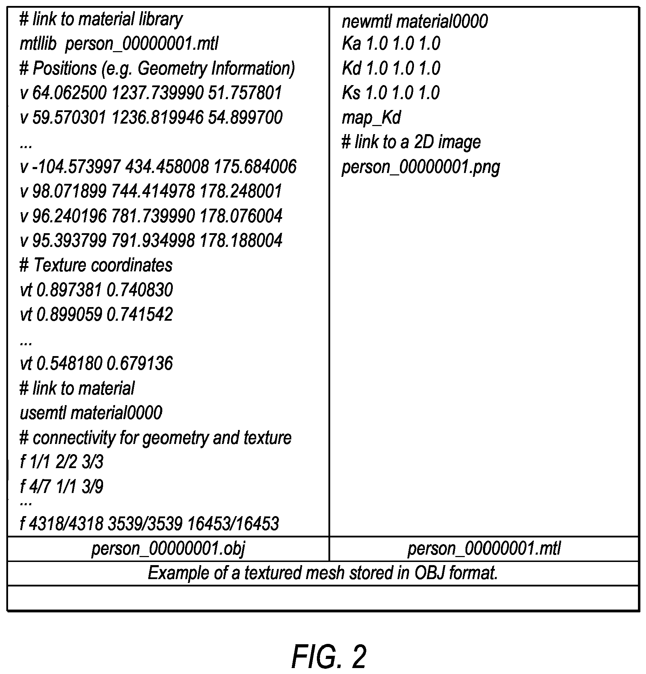

In some embodiments, a static or dynamic mesh that is to be compressed and/or encoded may include a set of 3D Meshes M(0), M(1), M(2), ..., M(n-1), wherein "n" is the number of point-in-time meshes in the set of 3D meshes. Each mesh M(i) at frame index "i" (also shown as mesh[i]) may be defined by a connectivity information C(i), a geometry information G(i), texture coordinates T(i) and texture connectivity CT(i). For each mesh M(i), one or multiple 2D images A(i) describing the textures or attributes associated with the mesh may be included. For example, FIG. 1 illustrates an example static or dynamic mesh M(i) comprising connectivity information C(i), geometry information G(i), texture images A(i), texture connectivity information TC(i), and texture coordinates information T(i). In some embodiments, the geometry information G(i) may include information regarding vertices, each comprising (*vertex[0], vertex[1], vertex[2]*). FIG. 2 illustrates an example of a textured mesh stored in object (OBJ) format.

For example, the example texture mesh stored in the object format shown in FIG. 2 includes geometry information listed as X, Y, and Z coordinates of vertices and texture coordinates listed as two dimensional (2D) coordinates for vertices, wherein the 2D coordinates identify a pixel location of a pixel storing texture information for a given vertex. The example texture mesh stored in the object format also includes texture connectivity information that indicates mappings between the geometry coordinates and texture coordinates to form polygons, such as triangles. For example, a first triangle is formed by three vertices, where a first vertex (1/1) is defined as the first geometry coordinate (e.g., 64.062500, 1237.739990, 51.757801), which corresponds with the first texture coordinate (e.g., 0.0897381, 0.740830). The second vertex (2/2) of the triangle is defined as the second geometry coordinate (e.g., 59.570301, 1236.819946, 54.899700), which corresponds with the second texture coordinate (e.g., 0.899059, 0.741542). Finally, the third vertex of the triangle corresponds to the third listed geometry coordinate which matches with the third listed texture coordinate. However, note that in some instances a vertex of a polygon, such as a triangle may map to a set of geometry coordinates and texture coordinates that may have different index positions in the respective lists of geometry coordinates and texture coordinates. For example, the second triangle has a first vertex corresponding to the fourth listed set of geometry coordinates and the seventh listed set of texture coordinates. A second vertex corresponding to the first listed set of geometry coordinates and the first set of listed texture coordinates and a third vertex corresponding to the third listed set of geometry coordinates and the ninth listed set of texture coordinates.

In some embodiments, the geometry information G(i) may represent locations of vertices of the mesh in 3D space and the connectivity C(i) may indicate how the vertices are to be connected together to form polygons that make up the mesh M(i). Also, the texture coordinates T(i) may indicate locations of pixels in a 2D image that correspond to vertices of a corresponding sub-mesh. Attribute patch information may indicate how the texture coordinates defined with respect to a 2D bounding box map into a three-dimensional space of a 3D bounding box associated with the attribute patch based on how the points were projected onto a projection plane for the attribute patch. Also, the texture connectivity information TC(i) may indicate how the vertices represented by the texture coordinates T(i) are to be connected together to form polygons of the sub-meshes. For example, each texture or attribute patch of the texture image A(i) may correspond to a corresponding sub-mesh defined using texture coordinates T(i) and texture connectivity TC(i).

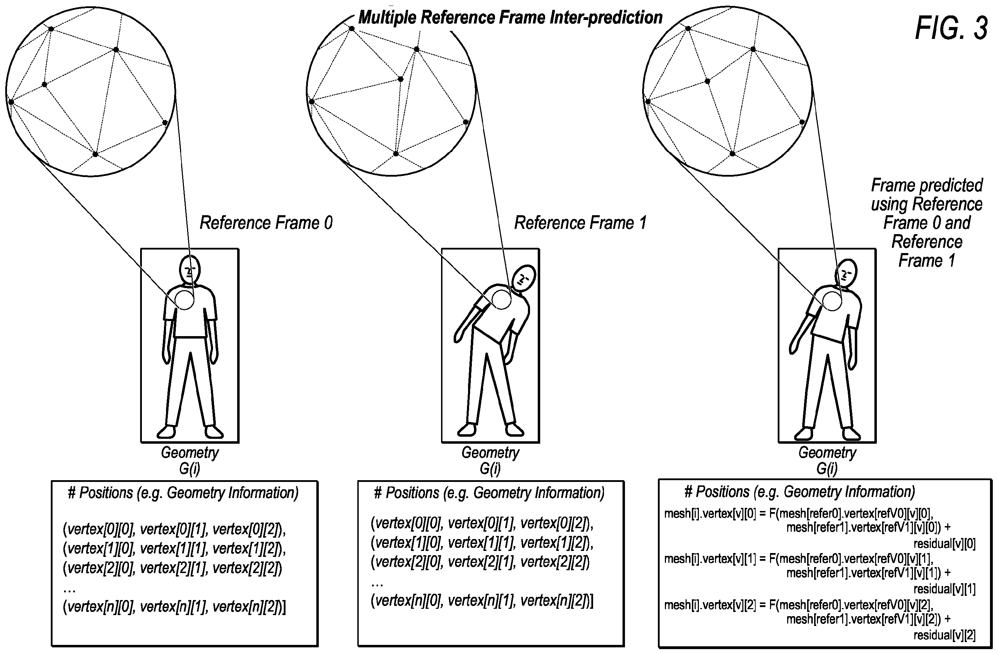

FIG. 3 illustrates inter-prediction for geometry information of a three-dimensional mesh, according to some embodiments.

In some embodiments, a 3D mesh may be encoded/decoded using inter-prediction to predict geometry information G(i) for a current (or another) point-in-time frame of the 3D mesh. In some embodiments, vertex values for the 3D mesh may be determined using different vertices values from multiple different previously decoded point-in-time frames of the 3D mesh. For example, the geometry information for a given frame (e.g. a frame being encoded or decoded) may be predicted using multiple reference frames (e.g., previously decoded frames, such as reference frame at index position 0 and reference frame at index position 1, wherein index position 0 and index position 1 represent instances of the dynamic mesh at different moments in time, also within a given reference frame, each of the vertices may also be ordered in one or more indexes, such as indices of the vertices values). The "geometry" G(i) of the current frame (e.g., vertices) at the current frame may be predicted using a function that correlates the current vertices with vertices from reference frame 0 and reference frame 1.

The reference frame 0 (e.g. at frame index position 0) may correspond to a set of vertices [(*vertex[0][0], vertex[0][1], vertex[0][2]), (vertex[1][0], vertex[1][1], vertex[1][2]), (vertex[2][0], vertex[2][1], vertex[2][2]), ...(vertex[n][0], vertex[n][1], vertex[n][2])*] and the reference frame 1 may correspond to a set of vertices [(*vertex[0][0], vertex[0][1], vertex[0][2]), (vertex[1][0], vertex[1][1], vertex[1][2]), (vertex[2][0], vertex[2][1], vertex[2][2]), ... (vertex[n][0], vertex[n][1], vertex[n][2])*] .

Note that in this example, the first index value in brackets indicates an index position for a vertex in reference frame 0 and the second value in brackets indicates a components value for that vertex, such as an X, Y, and Z component. The vertices for the current frame using multiple reference frame inter-prediction may be described using a set of functions:

$$mesh[i].vertex[v][0] = F(mesh[refer0].vertex[refV0][0],$$

$$mesh[refer1].vertex[refV1][0]) + residual[0]$$

$$mesh[i].vertex[v][1] = F(mesh[refer0].vertex[refV0][1],$$

$$mesh[refer1].vertex[refV1][1]) + residual[1]$$

$$mesh[i].vertex[v][2] = F(mesh[refer0].vertex[refV0][2],$$

$$mesh[refer1].vertex[refV1][2]) + residual[2]$$

The variable "i" indicates frame index, "v" indicates vertex index, and vertex[0], vertex[1], and vertex[2] indicates vertex positions of x, y, and z coordinates for a 3D mesh. The residual may be a difference between the original mesh and the encoded and reconstructed version of the mesh. The "refer0"/"refer1" indicates reference frame indices of reference mesh frame 0 and 1 and "refV0"/"refV1" indicates vertex indices for the reference mesh frame 0 and the reference mesh frame 1 respectively. The function F() may include various types of functions such as linear or non-linear functions that determine component vertex values based on combinations of component vertex values read from reference frames. In some embodiments, the function F() may be a mean average function or a weighted average function, wherein the weights used for the weighted average function may be based on temporal distance between the current and the reference meshes (e.g., temporal distance between the current frame and respective reference frames). Moreover, although FIG. 3 depicts vertices from two reference frames being used, more than two previously decoded reference frames may be used.

In some embodiments, for a 3D mesh, a type of inter-prediction (e.g., single reference frame inter-prediction, single reference frame multi-hypothesis inter-prediction, multiple reference frame multi-hypothesis inter-prediction, etc.) may be signaled in a bitstream. Moreover, in some embodiments, reference mesh set indices and reference mesh indices may be signaled in the bitstream. In some embodiments, when two reference meshes are used for inter-prediction, one reference frame may be selected per each reference mesh list or both of reference meshes can be selected from one reference mesh set. Said another way, more than one index may be used to order the reference frames. Also, within a given reference frame more than one index may be used to order the vertices positions.

In some embodiment, instead of signaling reference lists, predefined combinations may be signaled that include both prediction information and reference information to be used by functions to determine the predicted information. For example, the combinations may comprise information about the prediction type and the reference meshes used in prediction. When multiple combinations or multiple sets of combinations are available, the indices for them may be signaled per mesh, or per set of meshes or per sequence. For example, for the n-th mesh frame, the first reference mesh list can be conceptually constructed as {{uni-prediction, mesh[n-1]}, {bi-prediction, mesh[n-2], mesh[n-3]}} and the second reference list can be conceptually constructed as {{ uni-prediction, mesh[n-3]}, {uni-prediction, mesh[n-2]}}. Then for each mesh, the indication for which reference list is to be used and which combination is to be used may be signaled in the bitstream. In some embodiments, the prediction type may be derived from the number of reference meshes in the combination. In some embodiments, the prediction type may also indicate intra prediction.

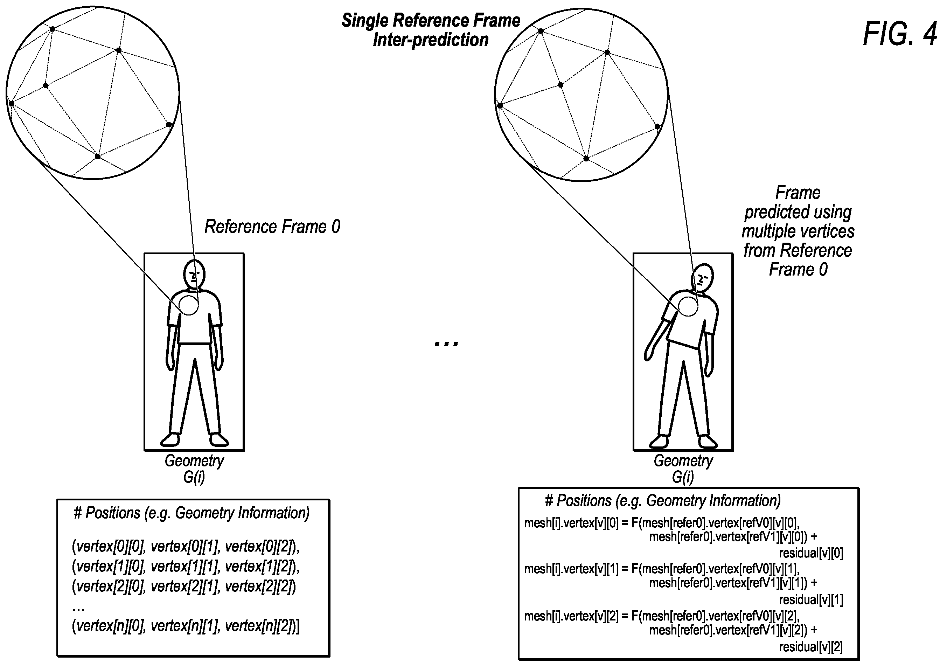

FIG. 4 illustrates a single reference frame, inter-prediction for geometry information of a three-dimensional mesh, according to some embodiments.

In some embodiments, a 3D mesh may be encoded/decoded using inter-prediction, wherein multiple different vertices from a single frame of the 3D mesh are used to predict vertex values at another (e.g., a frame currently being encoded or decoded) frame of the 3D mesh.

Similar to FIG. 3, vertices (or other information) for the current frame may be predicted. However, instead of using multiple vertices from multiple reference frames, the vertex values may be predicted using multiple vertices from a single reference frame. For example, geometry information G(i) of the current frame may be predicted using a function that correlates the current vertices with two different vertices from the same reference frame 0.

For example, the reference frame 0 may comprise or correspond to a set of vertices [(*vertex[0][0], vertex[0][1], vertex[0][2]), (vertex[1][0], vertex[1][1], vertex[1][2]), (vertex[2][0], vertex[2][1], vertex[2][2]), ...(vertex[n][0], vertex[n][1], vertex[n][2])].* Using a single reference frame multiple vertices inter-prediction, the vertices for the current frame may be described using a set of functions:

$$\text{mesh}[i].\text{vertex}[v][0] = F(\text{mesh}[\text{refer0}].\text{vertex}[\text{refV0}][0],$$

$$\text{mesh}[\text{refer0}].\text{vertex}[\text{refV1}][0]) + \text{residual}[0]$$

$$\text{mesh}[i].\text{vertex}[v][1] = F(\text{mesh}[\text{refer0}].\text{vertex}[\text{refV0}][1],$$

$$\text{mesh}[\text{refer0}].\text{vertex}[\text{refV1}][1]) + \text{residual}[1]$$

$$\text{mesh}[i].\text{vertex}[v][2] = F(\text{mesh}[\text{refer0}].\text{vertex}[\text{refV0}][2],$$

$$\text{mesh}[\text{refer0}].\text{vertex}[\text{refV1}][2]) + \text{residual}[2]$$

As discussed in FIG. 3, the function F() may include various types of functions such as linear or non-linear combinations, including a mean average function or a weighted average function that are weighted based on temporal distance. Moreover, more than two vertices from the same frame may be used to predict the current vertex. In some embodiments, a combination of multiple reference frame inter-prediction and single reference frame multiple vertices inter-prediction may be used. For example, a vertex for the current frame may be predicted using multiple vertices from reference frame 0 as well as a vertex from reference frame 1.

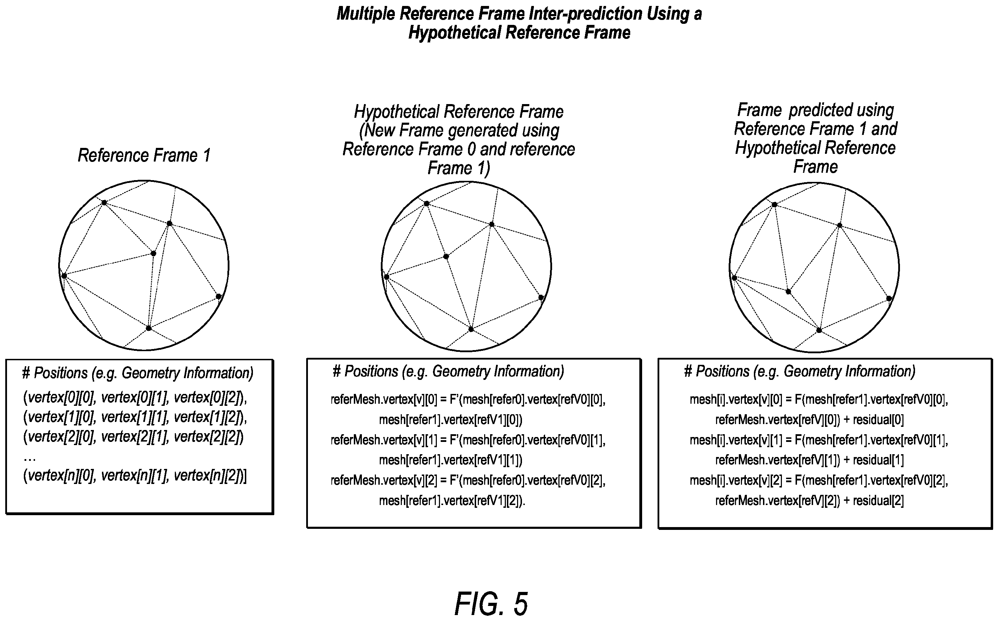

FIG. 5 illustrates inter prediction using more than two reference frames for geometry information of a three-dimensional mesh, according to some embodiments.

In some embodiments, when inter-prediction is used, one or more simulated reference frames can be generated during the decoding process. For example, a new reference frame, referMesh, can be generated based on two reference frames indicated by reference indices signaled, refer0, refer1 as shown below:

$$\text{referMesh}.\text{vertex}[v][0] = F'(\text{mesh}[\text{refer0}].\text{vertex}[\text{refV0}][0],$$

$$\text{mesh}[\text{refer1}].\text{vertex}[\text{refV1}][0])$$

$$\text{referMesh}.\text{vertex}[v][1] = F'(\text{mesh}[\text{refer0}].\text{vertex}[\text{refV0}][1],$$

$$\text{mesh}[\text{refer1}].\text{vertex}[\text{refV1}][1])$$

$$\text{referMesh}.\text{vertex}[v][2] = F'(\text{mesh}[\text{refer0}].\text{vertex}[\text{refV0}][2],$$

$$\text{mesh}[\text{refer1}].\text{vertex}[\text{refV1}][2]).$$

In some embodiment, the simulated reference mesh can be generated using the first N reference frames in the reference list.

The simulated reference mesh can be used as one of the multiple reference frames to predict the current mesh. For example, geometry information G(i) (e.g., vertices) of the current frame at frame index "i" may be predicted using a function that correlates the current vertices with vertices from a reference frame 1 and the referMesh that may itself be based on multiple reference frames. More than two reference frames may be used to predict the current frame. The vertices for the current frame at frame index "i" may be described using a set of functions:

$$\text{mesh}[i].\text{vertex}[v][0] = F(\text{mesh}[\text{refer1}].\text{vertex}[\text{refV0}][0],$$

$$\text{referMesh}.\text{vertex}[\text{refV}][0]) + \text{residual}[0]$$

$$\text{mesh}[i].\text{vertex}[v][1] = F(\text{mesh}[\text{refer1}].\text{vertex}[\text{refV0}][1],$$

$$\text{referMesh}.\text{vertex}[\text{refV}][1]) + \text{residual}[1]$$

$$\text{mesh}[i].\text{vertex}[v][2] = F(\text{mesh}[\text{refer1}].\text{vertex}[\text{refV0}][2],$$

$$\text{referMesh}.\text{vertex}[\text{refV}][2]) + \text{residual}[2]$$

where refer0 indicates the frame index for the first reference frame and refV1 and refV indicate vertex indices for the first reference mesh frame 1 and the second reference mesh frame respectively.

In some embodiments, more than two reference frames can be indicated explicitly. Also, instead of signaling two reference indices, for example refer0 and refer1 above, more than two, such as K indices represented as referIndex[0], referIndex[1], ..., referIndex[K-1], reference indices can be signaled. The vertices for the current frame at frame index "i", which may be described using a set of functions:

$$mesh[i].vertex[v][j] = F''(mesh[referIndex[0]].vertex[refV[0]][j], \ldots$$

$$mesh[referIndex[K-1]].vertex[refV[k-1]][j]) +$$

$$residual[j]$$

where j is 0..2 and refV[k] indicates the vertex indices of mesh[referIndex[k]].

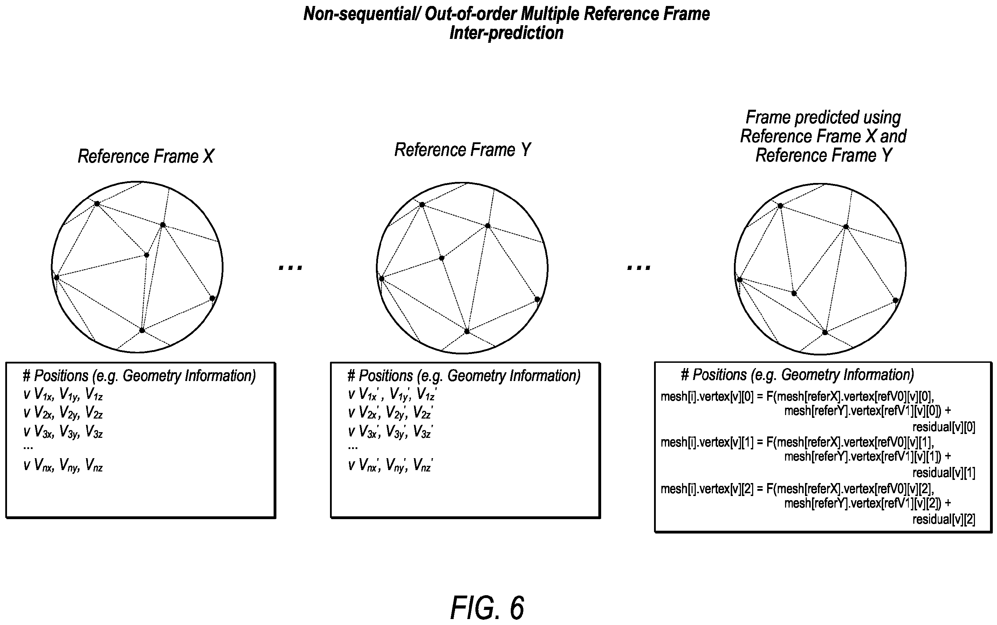

FIG. 6 illustrates a non-sequential/ out-of-order, reference frame inter-prediction for geometry information of a three-dimensional mesh, according to some embodiments.

In some embodiments, a 3D mesh may be encoded/decoded using inter-prediction, wherein vertices position location from multiple non-sequential/ out-of-order frames of the 3D meshes are used to predict geometry information G(i) at the current (or another) frame. As discussed in FIG. 4, geometry information for a current frame may be predicted using multiple reference frames (e.g., reference frame X and reference frame Y, wherein X and Y are not sequential). The G(i) of the current frame may be predicted using a function that correlates the current vertices with vertices from reference frame X and reference frame Y. In some embodiments, the reference frames X and Y used to predict the current frame may be non-sequential/ and/or out-of-order. For example, there may be a plurality of reference frames in between reference frame X and reference frame Y, such that reference frame Y is not the reference frame next in a sequence of reference frames available to be used to determine vertices for the current frame. Similarly, the current frame may not be a frame to be rendered after reference frame Y.

For example, the reference frame X at may correspond a set of vertices [*(vertex[0][0], vertex[0][1], vertex[0][2]), (vertex[1][0], vertex[1][1], vertex[1][2]), (vertex[2][0], vertex[2][1], vertex[2][2]), ...(vertex[n][0], vertex[n][1], vertex[n][2])*] and the reference frame Y may correspond a set of vertices [*(vertex[0][0], vertex[0][1], vertex[0][2]), (vertex[1][0], vertex[1][1], vertex[1][2]), (vertex[2][0], vertex[2][1], vertex[2][2]), ...(vertex[n][0], vertex[n][1], vertex[n][2])]*. The reference frame X and reference frame Y may be separated by a plurality of reference frames and may not be limited to sequential frames. The vertices for the current frame using multiple reference frame inter-prediction may be described using a set of functions:

$$mesh[i].vertex[v][0] = F(mesh[referX].vertex[refVX][0],$$

$$mesh[referY].vertex[refVY][0]) + residual[0]$$

$$mesh[i].vertex[v][1] = F(mesh[referX].vertex[refVX][1],$$

$$mesh[referY].vertex[refVY][1]) + residual[1]$$

$$mesh[i].vertex[v][2] = F(mesh[referX].vertex[refVX][2],$$

$$mesh[referY].vertex[refVY][2]) + residual[2]$$

The current frame may similarly have a plurality of other frames that are to be rendered in between the preceding reference Frame Y.

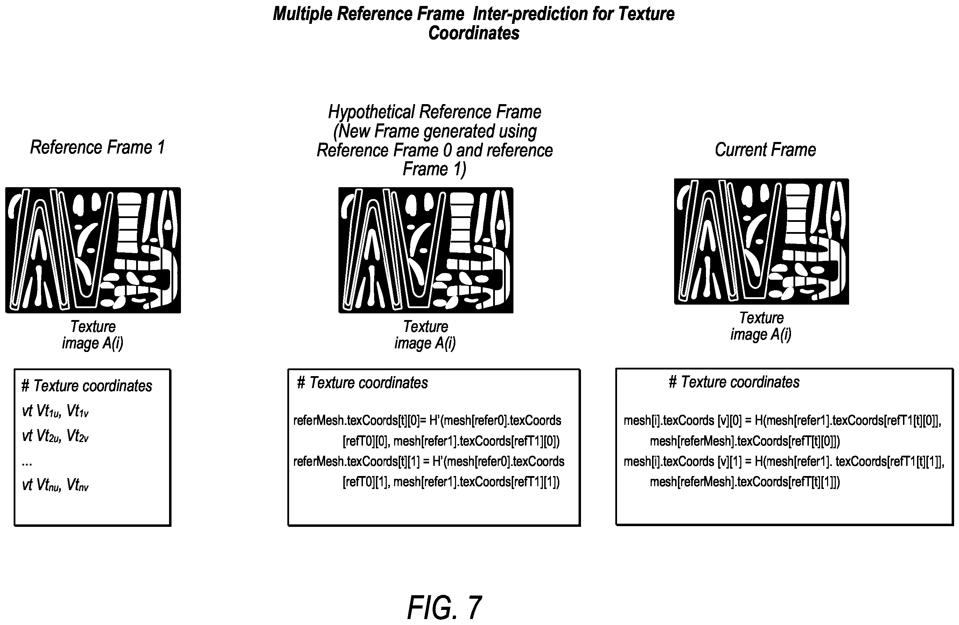

FIG. 7 illustrates an inter-prediction technique for texture coordinates of a three-dimensional mesh, according to some embodiments.

In some embodiments, a 3D mesh may be encoded/decoded using inter-prediction, wherein multiple different texture coordinates (e.g., texture coordinates T(i)) from multiple different frames are used to predict texture coordinates T(i) for the current (or another) frame of the 3D mesh. Similar to the inter-prediction discussed in FIG. 5 used to determine vertices values, texture coordinates for a current frame may be predicted using multiple reference frames (e.g., reference frame 1 and another reference frame, or even a simulated reference frame). The reference frame 1 may correspond to a set of texture coordinates [*(Vt_{1u}, Vt_{1v}), (Vt_{2u}, Vt_{2v})... (Vt_{nu}, Vt_{1n})*], and mesh vertices for hypothetical reference frame may be described using a set of functions:

$$referMesh.\ texCoords[t][0] = H'(mesh[refer0].\ texCoords\ [refT0][0],$$

$$mesh[refer1].\ texCoords\ [refT1][0])$$

$$referMesh.\ texCoords[t][1] = H'(mesh[refer0].\ texCoords\ [refT0][1],$$

$$mesh[refer1].\ texCoords\ [refT1][1])$$

The texture coordinates for the current frame may be predicted using frame inter-prediction using reference frame 1 and another reference frame, such as a simulated reference frame, wherein the simulated reference frame is predicted using reference frame 0 and reference frame 1. The vertices for the current frame may be described using a set of functions:

$$mesh[i].\ texCoords\ [v][0] = H(mesh[refer1].texCoords[refT1[t][0]],$$

$$mesh[referMesh].texCoords[refT[t][0]])$$

$$mesh[i].\ texCoords\ [v][1] = H(mesh[refer1].\ texCoords[refT1[t][1]],$$

$$mesh[referMesh].texCoords[refT[t][1]])$$

The refer0/refer1 indicates reference frame indices and refT1/refT indicates texture coordinates indices of the correspond to the reference mesh frame 1 and the hypothetical reference mesh frame respectively. Similar to function F() described in FIG. 3, function H() may be various types of functions such as linear or non-linear combinations. In some embodiments, the function H() may be a mean average function or a weighted average function, wherein the weights used for the weighted average may be based on temporal distance between the current and the reference meshes (e.g., temporal distance between the current frame and the reference frames).

Although FIG. 7 depicts the current frame as relying on two sequentially previous encoded frames, the reference frames used to predict the current (or another frame) frame may be non-sequential and may be at various frame indices, as discussed in FIG. 6. Additionally, as discussed in FIG. 4, more than two texture coordinates from the same frame may be used to predict the current texture coordinate. In some embodiments, a combination of multiple reference frame texture coordinate inter-prediction and single reference frame multiple texture coordinate inter-prediction may be used. For example, a texture coordinate for the current frame may be predicted using multiple texture coordinates from reference frame 0 as well as a texture coordinate from reference frame 1.

In some embodiments, the texture coordinates may be copied from one of the reference meshes. For example, the reference mesh from which to obtain texture coordinates may be signaled in the bitstream or may be indicated using a pre-established rule. The pre-established rule may be a rule to use a reference mesh that is temporally the closest, reference mesh with the highest quality, or a reference mesh that is first in the reference mesh list.

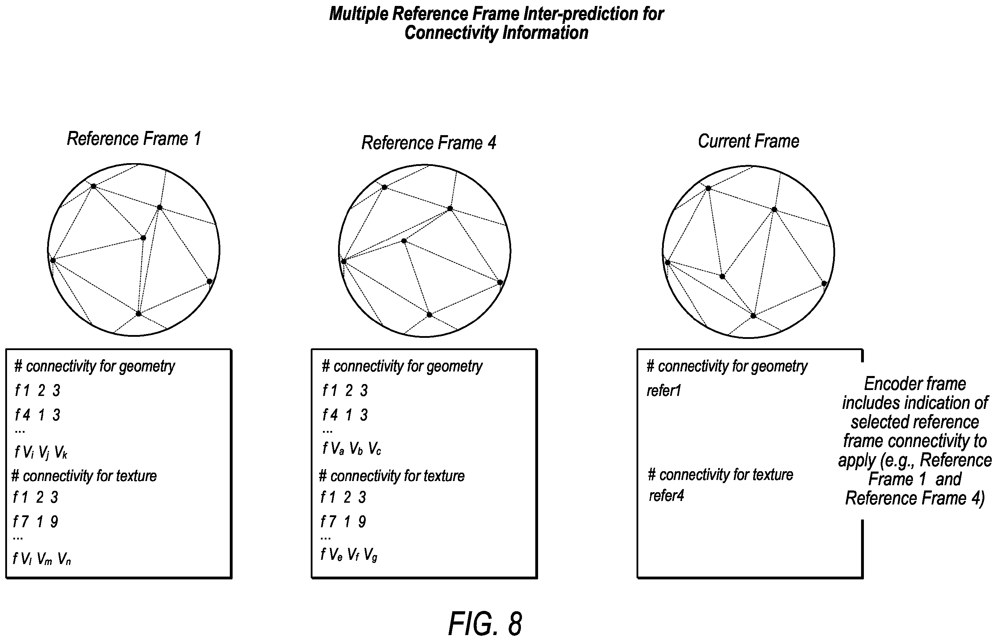

FIG. 8 illustrates an inter-prediction technique for connectivity information of a three-dimensional mesh, according to some embodiments.

In some embodiments, connectivity information (e.g., mesh vertices connectivity C(i) and/or texture coordinates connectivity TC(i)) may be determined using one or more reference frames. In some embodiments, the vertices connectivity information and/or texture connectivity information may be determined based on the indication to use the connectivity information and/or texture connectivity from one or more preceding frames. For example, connectivity information (e.g., vertices connectivity) of the current frame may be determined based on an indication signaled in the bitstream of a reference frame connectivity selected to be applied to the current frame.

For example, connectivity for geometry for reference frame 1 may be described by a set of indices (e.g., set of indices indicating that the first triangle is formed by vertices having index 1, 2, and 3, that a second triangle is formed by vertices having index 4, 1, and 3, and vertices having index $V_i$, $V_j$, and $V_k$). Similarly, connectivity for texture coordinates for reference frame 1 may be described by a set of indices (e.g., set of indices indicating that the first triangle is formed by vertices having index 1, 2, and 3, that a second triangle is formed by vertices having index 7, 1, and 9, and vertices having index $V_l$, $V_m$, and $V_n$). Connectivity for geometry (as well as connectivity for texture coordinates) for reference frame 4 may be described by a different set of indices.

In some embodiments, one or more indications may be signaled in the bitstream indicating the reference frame whose connectivity information to use. For example, FIG. 8 illustrates that for a frame, vertices connectivity from reference frame 1 should be used and that texture connectivity from reference frame 4 should be used for the current frame. Signals indicating "refer1"/"refer4" indicates reference mesh frame 1 and 4 may be provided in the bitstream. In some embodiments, multi-vertices inter frame encoder may apply multi-hypothesis inter-prediction as discussed above. For example, instead of using a single reference base mesh, a multi-hypothesis encoder may perform inter-prediction using multiple frames (as discussed above in FIGS. 3) to generate a bitstream to be decoded to reconstruct a 3D mesh.

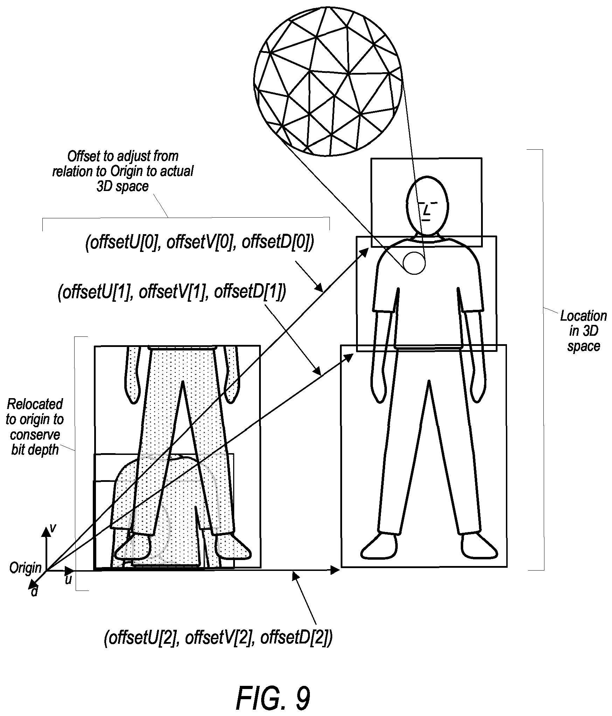

FIG. 9 illustrates offsets to adjust a three-dimensional mesh in relation to an origin used for encoding as compared to an origin for an actual three-dimensional space within which the three-dimensional mesh resides, for example to conserve bit depth, according to some embodiments.

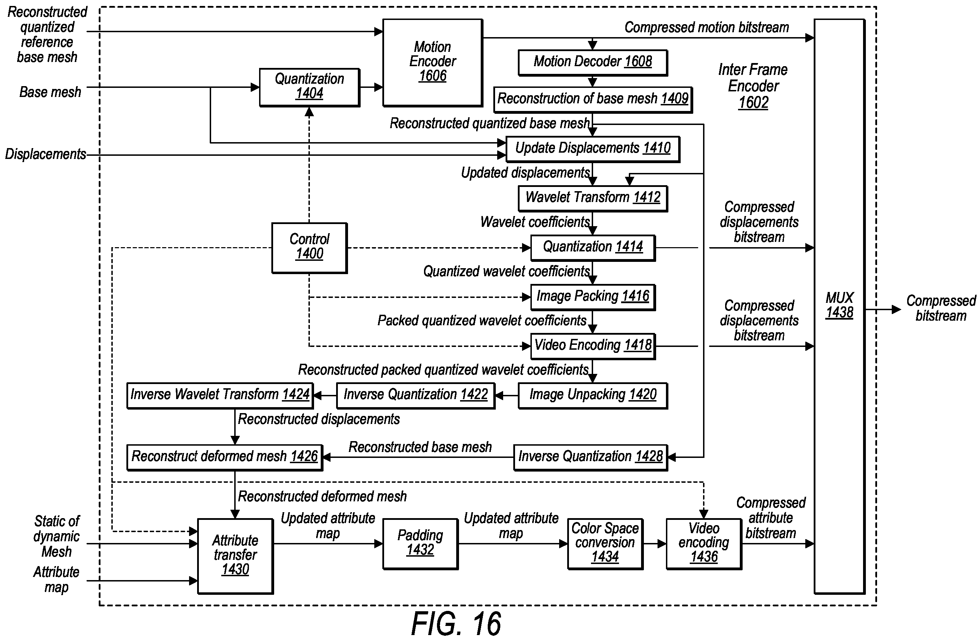

In some embodiments, a 3D mesh can be segmented into multiple parts (e.g., sub-meshes) and 3D offset values may be signaled to indicate a translation (and/or a rotation) of the corresponding sub-meshes from the origin (0,0,0) of the 3D space for each part. For example, as shown in FIG. 16, three offsets (e.g., (offsetU[0], offsetV[0], offsetD[0]), (offsetU[1], offsetV[1], offsetD[1]), and (offsetU[2], offsetV[2], offsetD[2]) may be applied to respective ones of three different parts of the mesh (e.g. sub-meshes) to relocate the parts to an origin, thereby conserving bit depth.

In some embodiments, the offsets may be signaled when a flag in an atlas sequence parameter set (ASPS) or atlas frame parameter set (AFPS) is indicated. In some embodiments, offsetU, offsetV and offsetD may be signaled using a descriptor, ue(v), or they may be signaled with a fixed length based on the bit depth of the output meshes of the base mesh sub-bitstream or based on the bit depth of the output meshes of a variable dynamic mesh compression (V-DMC) bitstream depending on when the inverse translation process is applied.

In some embodiments, the offsets can be derived from the center of the mesh instead of the origin of the 3D space. In some embodiments, in addition to the offset, size of the bounding box of the reconstructed sub-mesh of the patch may be indicated.

*Reconstruction of mesh from reference meshes with different number of vertices*

In some embodiments, in performing the inter-prediction techniques above, when reference vertex indices are inferred to be the same as the current vertex index, and the total number of reference meshes is a smaller value than an index value for the current mesh, the predictors may be acquired only from the valid reference vertex. If both of the reference meshes references are invalid, the predictor may be set as 0 or same as the previously reconstructed vertex or set to an average of the reconstructed vertices. In some embodiments, when the reference vertex index for one of the reference mesh is not valid, then the predictor may use the last valid vertex value in the reference mesh. The same method may be applied to texture coordinates and connectivities when they are copied from the reference.

*Prediction per group of vertices*

In some embodiments, it may be more efficient to predict only a limited part of a mesh from the reference mesh, where other parts of the mesh are intra-predicted. To accommodate this, the vertices may be signaled to belong to a group (e.g., sub-mesh) and then the vertices in a group may be predicted by the prediction mode of the group. For each group of vertices, the prediction mode, intra prediction or other multi-hypothesis prediction such as uni-prediction, bi-prediction, may be signaled, wherein the signaled prediction mode applies to all the vertices in the group. Also, for each group the inter-prediction related information, such as reference mesh information, reference mesh list index, reference mesh indices, predictor derivation methods, and weights for predictors, may be signaled for a group of vertices.

When the reference vertex indices are signaled explicitly or the difference between the current vertex and the reference vertex indices are signaled, it may be signaled per group. The reference vertex indices of the consecutive vertex indices in a group may be the consecutive vertex indices from the reference vertex index signaled or calculated. For example, when the reference vertex index acquired for a group is refG, the reference vertex index of i-th vertex in the group may be refG + i.

In some embodiments, a size of a group N, may be signaled or may be pre-defined for the entire sequence or for a frame or for a sub-mesh or mesh. In some embodiments, the size of the group (e.g., sub-mesh) may be decided based on the number of vertices in a mesh. In some embodiments, the size of a group may be signaled per group (e.g., sub-mesh) at the beginning of each group (e.g., sub-mesh). In some embodiments, a list that contains information indicating a size of each group (e.g., sub-mesh) may be signaled at the beginning of the mesh. In some embodiments, the number of groups may be predefined and the prediction mode of each group may be predetermined.

*Reference mesh reordering*

In some embodiments, the vertices and their corresponding components in the reference point-in-time meshes may be reordered for better prediction. The reordering method may be signaled per mesh, per frame, per sequence, or it may be pre-defined. The reordering methods for multiple point-in-time reference meshes may be the same or may be different. An example of reordering may include sorting of vertices based on their position.

*Residual vector prediction*

In some embodiments, residuals may be added to the predictors to reconstruct the current vertex values. Residuals may be predicted from the other residuals from the neighboring vertices in a current mesh. For example, residuals for a current frame may be described by the following set:

$$\text{residual}[v][0]=N(\text{residual}[neigh0][0],\dots, \text{residual}[neighn\text{-}1][0]) + \text{refine}[v][0]$$

$$\text{residual}[v][1]=N(\text{residual}[neigh0][1],\dots, \text{residual}[neighn\text{-}1][1]) + \text{refine}[v][1]$$

$$\text{residual}[v][2]=N(\text{residual}[neigh0][2],\dots, \text{residual}[neighn\text{-}1][2]) + \text{refine}[v][2]$$

The neigh0...neighrn-1 may indicate the neighboring vertex indices of the current vertex with vertex index v. The number of neighboring vertices may be limited. N() may be any type of functions such as linear or non-linear combination among the neighboring vertices. For example, N() may include a mean average function or weighted average function similar to F() or H() discussed above in FIGS. 3 and 7. In some embodiments, the weights used for the weighted average may be signaled. In some embodiments, the weights may be determined by the distance from the neighboring vertices and the predictor of the current vertex, or it may be pre-established according to one or more rules. In some embodiments, the weights may be pre-established per mesh or per sequence or per group of vertices.

In some embodiments, the residual of a vertex may be set to be the same as the residual of the reference vertex in the reference mesh. In some embodiments the residual of a vertex may be set as same as the residual of another vertex in the current mesh. The index of the reference vertex in the current mesh may be signaled or derived.

*Precision of prediction*

In some embodiments, when predictors are determined (such as using the functions above, F(), H(), N() to determine the values of the predictors), the values may be rounded to the closest integer values. In other case the values may be floored to the closest and smaller integer values. In some embodiments, the values may be maintained to be a certain sub-precision (such as 1/2, ¼ or 1/8) until reconstructing of the mesh is complete and then, sub-precision positions of the mesh may be refined to the integer precision based on the signaled syntax related to the bit depth of the reconstructed mesh. In some embodiments, the clipping process may be applied during the prediction and/or during the residual calculation and/or during the final reconstruction.

*Inter and intra predicted meshes*

In some embodiments, some groups (e.g., sub-meshes) of a mesh may be inter-predicted and some groups (e.g., other sub-meshes of the mesh) may be intra-predicted. In this case, the intra coded data (e.g., static mesh codec coded data) and the inter prediction information such as reference indices and residuals may be signaled for one sub-mesh. For example, per N[g]-vertex of group, the prediction type, intra-predicted or inter-predicted and inter-prediction related information including weights for predictors, may be signaled where N[g] indicates the number of vertices in the g-th group. After reconstructing each part, the reconstructed meshes may be concatenated. The connectivity information may then be updated accordingly.

In some embodiments, the mesh components of each part (inter-predicted and intra-predicted part, such as inter-predicted or intra-predicted sub-meshes) may include dummy values for one or more portions whose information is signaled in other parts. For example, if an X value is intra-predicted and Y and Z values are inter-predicted, a dummy value may be used for the X value in the inter-prediction. As another example, the first portion of the mesh that has a first set of N vertices which may be intra predicted and a second portion of the mesh that has the next M vertices which may be inter predicted, wherein the reconstructed mesh of the first portion may have only N vertices and the second has only M vertices. In some embodiments, the reconstructed sub-mesh corresponding to the first portion may have (N+M) vertices but only N vertices may have valid geometry values. The values of M vertices may be replaced by the values reconstructed from the second portion. In some embodiments, the reconstruction methods for the connectivity among groups of vertices may be signaled.

In some embodiments, the prediction type (e.g., intra prediction and/or inter prediction), may be indicated per triangle instead of being indicated per vertex. Similarly, in some embodiments, motion vectors also may be signaled per triangle. The vertices may be comprised of a triangle that are predicted by the indicated method.

In some embodiments, the inter prediction may have multiple modes that indicate that prediction related information is signaled for the attributes. For example, one of the inter prediction modes may indicate that only the residuals of vertex positions(difference between the vertex positions of the reference and the current) are signaled. Another mode may indicate that the residuals of texture coordinates are also signaled.

When the residuals of texture coordinates are signaled, the motions may be signaled per group of texture coordinates. The group may be formed by connectivity information. Also, the texture coordinates may be linearly transformed to reduce the residuals. The linear transform may include shifts (e.g., translations), rotations (e.g., 90, 180, 270 degrees), transpositions, and combinations.

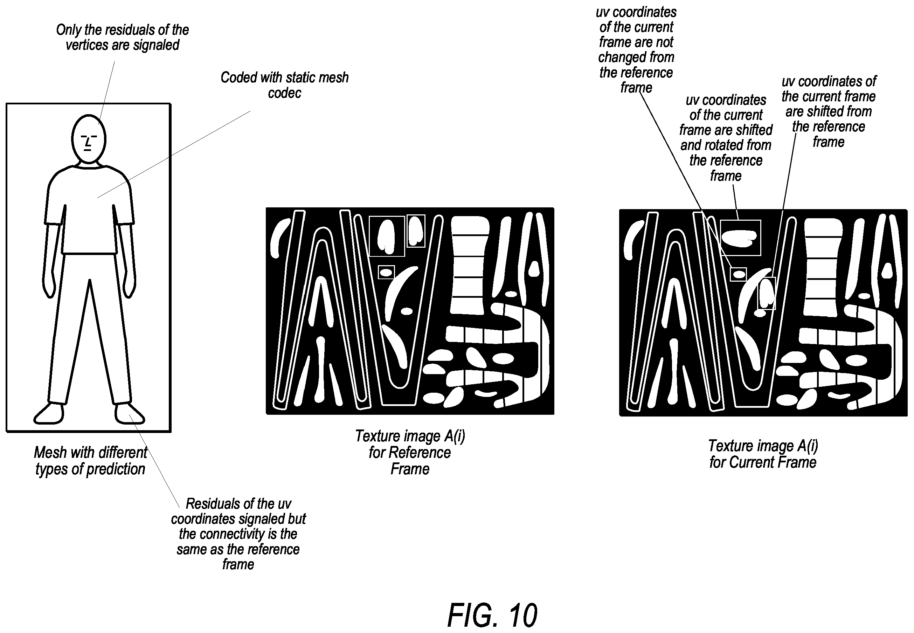

For example, FIG. 10 illustrates different types of prediction related information signaled for mesh attributes, according to some embodiments. As shown in FIG. 10, one portion of the mesh may be indicated as coded with a static mesh codec (e.g., intra coded). Another portion of the mesh may be indicated as having only residuals of the vertices that are signaled (which means the connectivity and the texture coordinates are the same as the reference). A third portion of the mesh may be indicated as having the residuals of the texture coordinates also signaled but the connectivity as being the same as the reference frame.

Furthermore, in FIG. 10, texture maps of the current and the reference frame illustrate different texture coordinates transformations. In some embodiments, one area of the texture image shows corresponding texture coordinates of the current frame are not changed from the reference frame. Another area of the texture image shows that the corresponding texture coordinates of the current frame may be shifted (translated) from the reference frame. A third area of the texture image shows that the corresponding texture coordinates of the current frame may be shifted and rotated from the reference frame. For each group of texture coordinates (e.g., connected components), it may be signaled that the texture coordinates are shifted or rotated. Then, a difference between shifted and/or rotated texture coordinates and the reference texture coordinates may be signaled.

When texture coordinates are signaled with their connected component information, the residuals may be signaled in a separate (e.g., different) bitstream. For example, in V-DMC, a 3D mesh compression system under development in MPEG, the residuals may be signaled in the video sub-bitstream and the rest of the information such as translational motions, rotational motions, and bounding box information (minimum and maximum values of the texture coordinates in the group(connected component)) may be signaled in the atlassub-bitstream. In another embodiment, texture coordinates can be intra coded based per connected component. The bounding box information of connected components of texture coordinates may be signaled and the difference between the texture coordinates and the minimum value of the connected component may be signaled. In this case, the bounding box information and the difference may be signaled in different sub-bitstreams in a such case of V-DMC.

In some embodiment, the bounding box information of connected components of vertex positions may be signaled and the difference between the vertex position and the minimum value of the connected component may be signaled. In this case, the bounding box information and the difference may be signaled in different sub-bitstreams in a such case of V-DMC.

In another embodiment, the bounding box information of connected components of vertex positions may be signaled for intra prediction, wherein the difference between the vertex position and the minimum value of the connected component may be signaled. Similarly, the bounding box information and the difference may be signaled in different sub-bitstreams.

*V-DMC, inter prediction of displacements*

In some embodiments, a base mesh in a point-in-time frame may be a simplified version of the desired reconstructed mesh. Additionally, delivered refinement data (e.g., 'displacements') may be added to the simplified version. In some embodiments, information for the sequence of simplified base meshes is signaled in a sub-bitstream named base mesh sub-bitstream. Information for the sequence of displacements may be signaled in the video sub-bitstream. The displacement of a frame may be predicted from displacements in another frame and the residuals, e.g., the difference between the predicted displacement and the original displacements may be signaled. Before any compression method, such as video codec or arithmetic codec, may be used, displacement values may be composed by the data of displacement or the data of residuals. For this inter frame prediction, above-described inter-prediction processes may be used.

*V-DMC, number of sub-meshes in different sub-bitstreams*

In some embodiments, a mesh in a point-in-time frame may be segmented into multiple 'sub-meshes' and then the sub-meshes may be coded independently. The sub-meshes in one frame may have different prediction types such as intra prediction and inter prediction. The above-mentioned concepts may be applied per sub-mesh in this system.

In some embodiments, a bitstream may consist of independent sub-bitstreams, such as a base mesh sub-bitstream and an atlas data sub-bitstream. In such embodiments, the number of sub-meshes or their Ids in one point-in-time frame may be represented differently in different sub-bitstreams for that point-in time frame. For example, in the base mesh sub-bitstream, it may not be necessary to signal a new base mesh for each sub-mesh for each point-in-time frame. Thus, some point-in-time frames may include fewer signaled base meshes for the respective sub-meshes than in other point in time frames. As a simplified example, consider a dynamic mesh that is segmented into 5 sub-meshes. As an example, for the first point in time 5 base meshes may be signaled in the base mesh sub-bitstream and 5 sets of corresponding atlas information may be signaled in the atlas sub-bitstream. However, for the next point in time frame, some of the sub-meshes may use inter-prediction such that signaling a new base mesh for the next point-in-time frame is not necessary. In such a case, fewer than 5 (e.g. say 3) base meshes may be signaled in the base mesh sub-bitstream for the next point in time frame (e.g. 3 of the sub-meshes are predicted using intra-prediction and the other two are predicted using inter-prediction). However, in the atlas sub-bitstream an additional 5 set of atlas information would be signaled for the next point-in-time frame.

*Restricting numbers of sub-meshes in different sub-bitstreams*

In some embodiments, differences in the number of sub-meshes in respective sub-bitstreams for a given point-in-time frame may be prevented by a requirement such as a requirement that the number of sub-meshes in all the sub-bitstreams should be same and that the available sub-mesh Ids are same. In some embodiments, the requirement may be that the number of sub-meshes in the atlas data sub-bitstream is always less or equal to the number of sub-meshes in the base mesh-sub-bitstream. In some embodiments, the available sub-mesh Ids in the atlas data sub-bitstream may be a subset of the available sub-mesh Ids in the base mesh sub-bitstream.

*Allowing different numbers of sub-meshes in different sub-bitstreams*

In some embodiments, if different numbers of sub-meshes and/or sub-mesh Ids of sub-meshes is allowed over multiple sub-bitstreams of a frame, such discrepancies may be taken care of at the reconstruction stage. For example, iff a patch in the atlas data sub-bitstream indicates that it corresponds to a sub-mesh with a sub-mesh Id, but a sub-mesh with the sub-mesh Id is not present in the base mesh sub-bitstream, the reconstruction process may output an empty sub-mesh.

*Generating sub-meshes after the decoding of the base mesh sub-bitstream.*

In some embodiments, when the number of sub-meshes are different or sub-mesh Ids are not matched, the encoder/decoder may indicate to generate sub-meshes from the reconstructed base meshes from the base mesh sub-bitstream. The bitstream may convey information about the number of base-meshes that need to be generated, and/or a method to generate the base-meshes (such as connected component) and may provide a method to generate the sub-mesh Ids.

In some embodiments, there may be a plurality of methods to generate base-meshes. In some embodiments, pre-defined methods or the method type may be signaled. In some embodiment, the methods may be signaled in a message. The number of generated base-meshes from one sub-mesh base-mesh may be signaled or derived based on the number of sub-meshes in the base mesh sub-bitstream and/or the number of sub-meshes in the atlas data sub-bitstream. The sub-mesh Ids for the newly generated base-meshes for other sub-meshes may be explicitly signaled or they may be derived based on the sub-mesh Ids of sub-meshes in the base mesh sub-bitstream and the sub-mesh Ids of sub-meshes in the atlas data sub-bitstream.

*Signaling Multiple Locations for a Given Patch or Tile*

In some embodiments, a tile or patch may be signaled differently for different uses within a given point-in-time frame. For example, a patch used for intra-prediction for a current moment-in-time that is signaled in a current moment-in-time frame may differ from another version of the same patch that is signaled in the same video frame for the current moment-in-time, but that is to be used as a reference frame for predicting a value for a subsequent point-in-time frame. As another example, attribute values for a given patch that are packed into an attribute video image frame (e.g. an attribute patch) may differ from a geometry patch (e.g. displacement values included in a patch and packed into a 2D image frame representing geometry information). In some situations, wherein inter-prediction is used, the geometry patches may differ from the attribute patches, for example because some of the geometry patches are predicted using inter-prediction while corresponding attribute patches for the same point-in-time frame are signaled or predicted differently, for example by using a different prediction technique.

In some embodiments, tiles of the video frame may be used to locate patches packed into the video frame. For example, multiple sets of patches may be included in a tile. In the atlas sub-bitstream, atlas information for locating the tile in the video frame (such as a location of a corner of the tile and a size of the tile) may be signaled in the atlas sub-bitstream. Additionally, information for locating patches may be signaled in the atlas sub-bitstream but may be formatted in reference to the tile. For example, a starting location of a corner of a bounding box for a tile may be reference relative to a reference point of the tile (as opposed to a reference point of the larger video frame).

In some embodiments, syntax elements of the atlas sub-bitstream are used to find areas corresponding to tiles and patches in 2D image frames used for geometry information and in other 2D image frames used for attribute information.

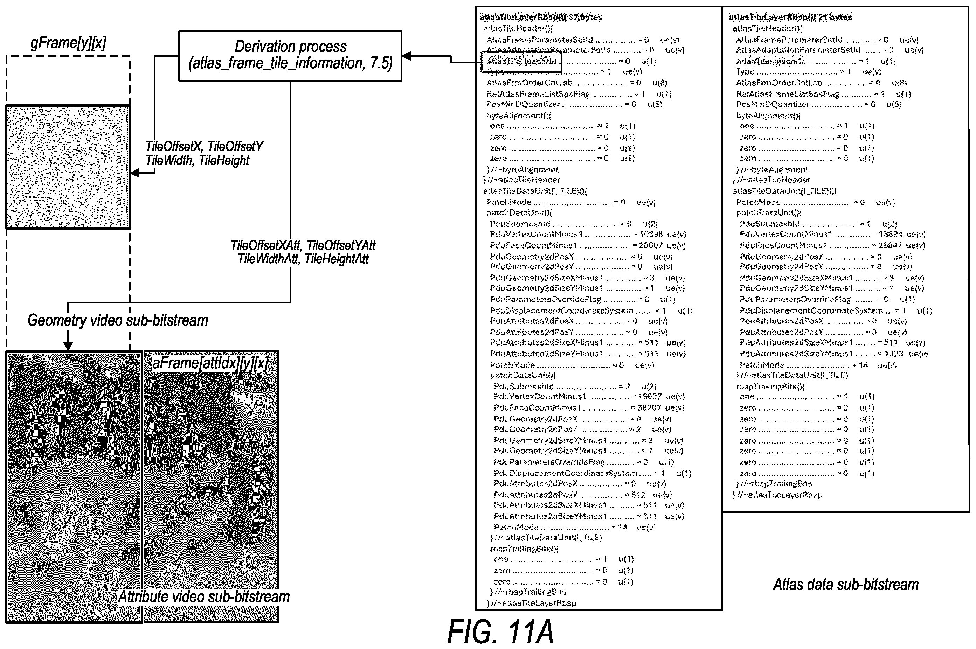

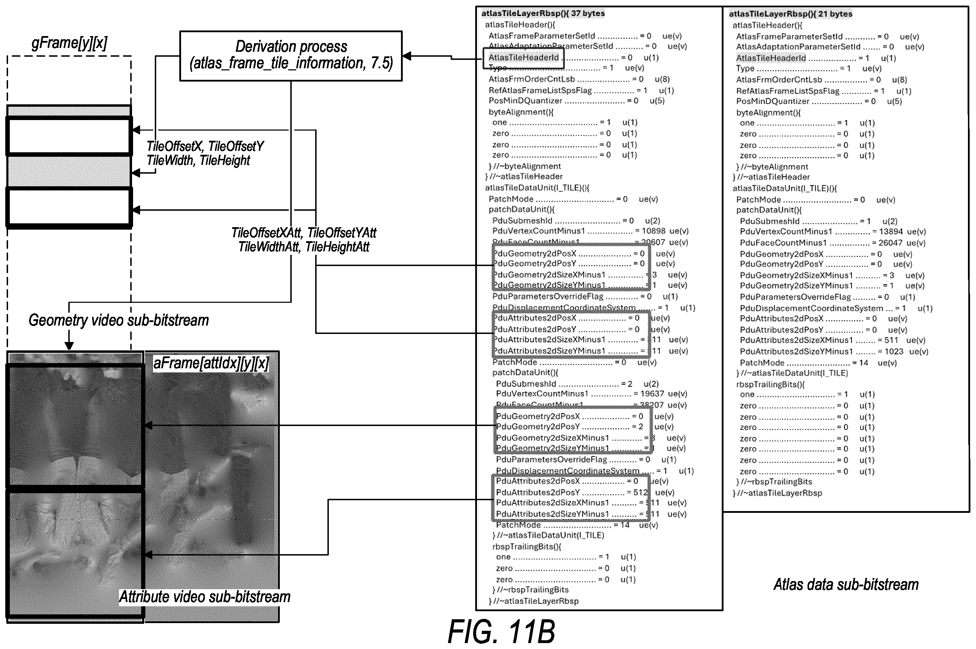

For example, the size and position of the larger boxes (e.g. tile boxes) are derived using the atlas frame tile information, atlas frame attribute tile information, and atlas tile ID. The smaller boxes (e.g. patch bounding boxes) can then be derived (e.g. size and location) using patch information included in the atlas sub-bitstream, that is derived in reference to the larger tile boxes. For example, this is shown in FIGs. 11A-11B.

However, as explained above, in some situations a given patch or tile may need to correspond to different portions of a video image frame. For example, the area covered by an attribute patch may differ from the area covered by the corresponding geometry patch, wherein the attribute patch and the geometry patch correspond to the same patch when reconstructed into a 3D version of the dynamic mesh with textures applied. In such situations, multiple image positions and sizes can be signaled for the same patch.

For example, the mesh data unit number of mapped areas can be signaled as follows: mdu_num_mapped_area [ tileID ][ patchIdx ] and mdu_num_mapped_area_attribute[ tileID ][ patchIdx ][ i ]. This can be signaled in the patch, the atlas frame parameter set (AFPS) or the atlas sequence of frames parameter set (ASPS). In some embodiments, only the number of mapped areas for attributes (or geometry) may be signaled and the other (not signaled) is assumed to be the same as the one that is signaled. In some embodiments, if not signaled, the number of mapped areas may default to "1" per patch, so that only patches that deviate from having 1 mapped area have a number of mapped areas signaled.

Below is an example mesh data unit syntax as described above:

| meshpatch_data_unit( tileID, patchIdx ) { |
|---|
| ... |
|     **mdu_num_mapped_area[** tileID ][ patchIdx ] |
|     for(int areaIdx=0; areadIdx< mdu_num_mapped_area[ tileID ][ patchIdx ]; areaIdx++) { |
|     **mdu_2d_pos_x[** tileID ][ patchIdx ][ areaIdx ] |
|     **mdu_2d_pos_y[** tileID ][ patchIdx ][ areaIdx ] |
|     **mdu_2d_size_x_minus1[** tileID ][ patchIdx ][ areaIdx ] |
|     **mdu_2d_size_y_minus1[** tileID ][ patchIdx ][ areaIdx ] |
|     } |
|     ... |
|     for( i=0; i< asve_num_attribute_video; i++ ){ |
|     **mdu_num_mapped_area_attribute[** tileID ][ patchIdx ][ i ] |
|     if( asve_attribute_subtexture_enabled_flag[ i ] ){ |
|     for(int areaIdx=0; areadIdx< mdu_num_mapped_area_attribute [ tileID ][ patchIdx ][ i ]; areaIdx++) { |
|     **mdu_attributes_2d_pos_x[** tileID ][ patchIdx ][ i ][ areaIdx ] |
|     **mdu_attributes_2d_pos_y[** tileID ][ patchIdx ][ i ][ areaIdx ] |
|     **mdu_attributes_2d_size_x_minus1[**tileID ][ patchIdx ][ i ][ areaIdx ] |
|     **mdu_attributes_2d_size_y_minus1[**tileID ][ patchIdx ][ i ][ areaIdx ] |
|     } |
|     } |
|     } |
|     if( afve_projection_texcoord_present_flag[ smIdx ] ) |
|     texture_projection_information( tileID, patchIdx ) |
| } |

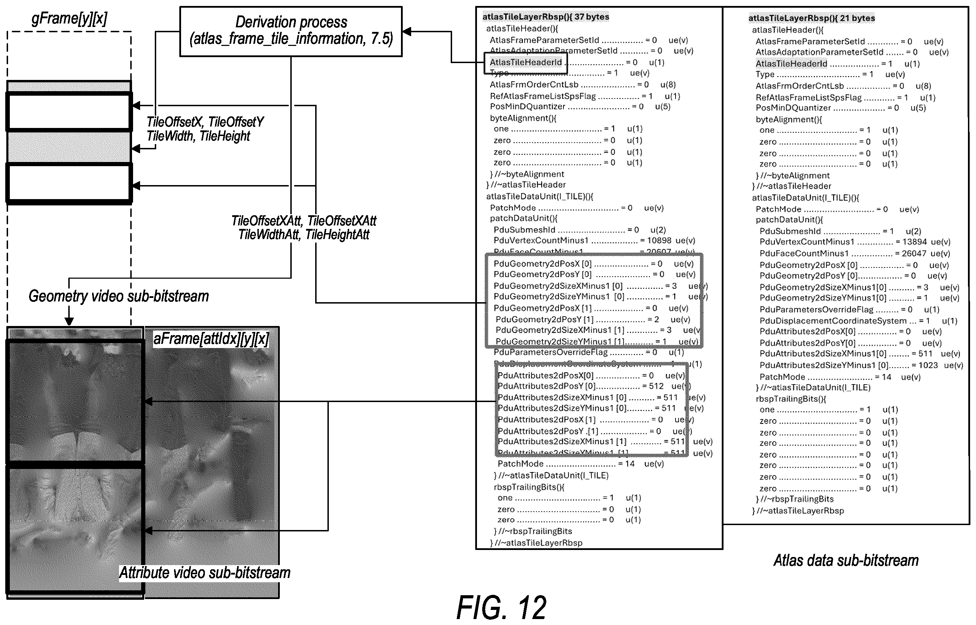

For example, FIG. 12 shows an example where two sets of data are signaled for the geometry video and two sets of data are signaled for the attribute video. However, in the atlas tile layer there is one patch that is different than what is shown in FIGs. 11A-11B.

In some embodiments, areas corresponding to a tile are derived using the (1) atlas tile ID, (2) atlas frame tile information syntax, and (3) atlas frame attribute tile information syntax. In order to make multiple areas of a video image frame correspond to a same tile, the location information (e.g. partition indices for left top, column offset, and row offset) are signaled for each tile in the atlas frame tile information syntax. For example, below is an example atlas frame attribute file information syntax:

| |
|---|
| atlas_frame_attribute_tile_information( attrIdx ) { |
| .= |
|     if(!afati_single_tile_in_atlas_frame_flag[ attrIdx ] ) |
|       afati_num_tiles_in_atlas_frame_minus1[ attrIdx ] = 0 |
|       if( !afati_single_partition_per_tile_flag[ attrIdx ] ) { |
| ... |
|     for( i = 0; i < afati_num_tiles_in_atlas_frame_minus1[ attrIdx ] + 1; i++ ) { |
|         **afati_num_mapped_area[** tileID ][ patchIdx ] |
|         for(int areaIdx=0; areadIdx< mdu_num_mapped_area[ tileID ][ patchIdx ]; areaIdx++){ |
|         **afati_top_left_partition_idx[** attrIdx ][ i ][areaIdx] |
|     **afati_bottom_right_partition_column_offset[** attrIdx ][ i ][areaIdx] |
|         **afati_bottom_right_partition_row_offset[** attrIdx ][ i ][areaIdx] |
|         } |
|       } |
|     } |
|     else{ |
|       afati_num_tiles_in_atlas_frame_minus1[ attrIdx ]=               NumAttributePartitionsInAtlasFrame[ attrIdx ] - 1 |
|     for( i = 0; i < afati_num_tiles_in_atlas_frame_minus1[ attrIdx ] + 1; i++ ) { |
|         **afati_num_mapped_area[** tileID ][ patchIdx ] |
|       for(int areaIdx=0; areadIdx< |
| mdu_num_mapped_area[ tileID ][ patchIdx ]; areaIdx++) |
|         **afati_partition_idx[** attrIdx ][ i ][areaIdx] |
|   } |
| ... |
| } |

In some embodiments, when multiple areas are signaled for a given tile, an indication (e.g. index) can be included in a patch to indicate in which tile area the patches bounding box area resides.

*Managing Size Mismatches Between Image Size and Texture Coordinate Sizing*

The texture coordinates of a mesh indicate the location (pixel position that can be fractional) in the image where a texture for a given part of the mesh resides. In some cases, the texture coordinates are normalized to be between 0 to 1. To map the pixel position and the texture coordinates, the renderer requires the size of the video image. In V-DMC, the texture coordinates of the output meshes can be normalized based on the nominal texture image.

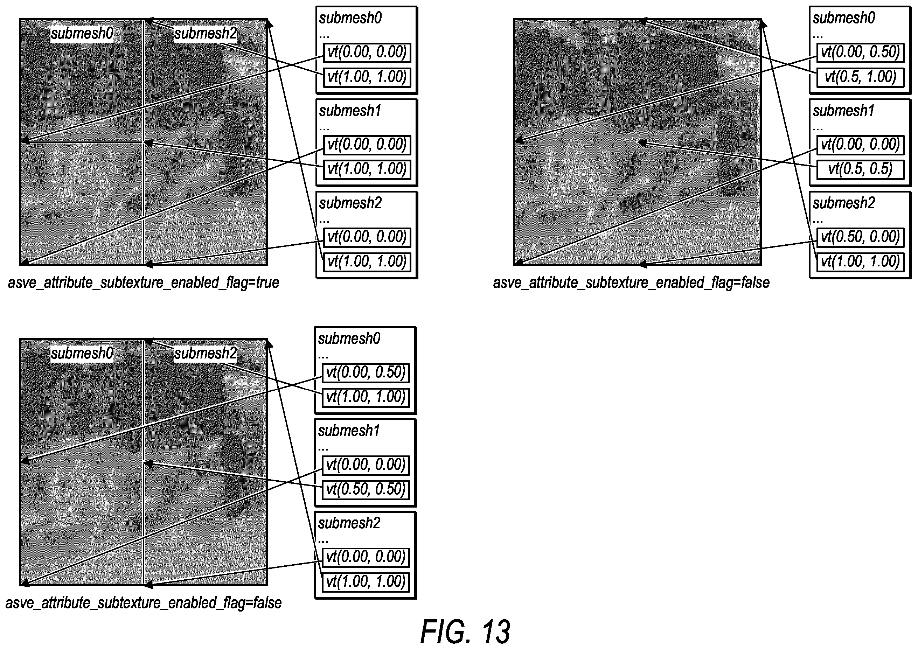

In V-DMC, the texture coordinates of all the sub meshes in the base mesh sub-bitstream can be normalized within the nominal size of the image. The right-side of FIG. 13 depicts the case. The texture coordinates (0,0) of the sub meshes indicates the left bottom of the image and (1,1) indicates the right top of the image for all the sub meshes in the base mesh sub-bitstream.

In another embodiment, the texture coordinates (0,0) of a sub mesh indicates the left bottom of the area indicated in the corresponding patch and (1,1) indicates the right top of the area indicated in the corresponding patch as shown on the left top side of FIG. 13.

For example, this may be signaled as: asve_attribute_subtexture_enabled_flag[ attIdx ] signalled for attIdx-th attribute indicates this difference. When asve_attribute_subtexture_enabled_flag[ attIdx ] is true, it is assumed that the texture coordinates of a sub mesh are based on the image size corresponding to a patch, and then invokes the texture coordinate adjustment process to renormalize the texture coordinates based on the frame size for the V-DMC output meshes. For example, the texture coordinate (0,0) of submesh0 is renormalized as (0, 0.5) for the V-DMC output mesh.

However, in some embodiments, as shown in the bottom left side of FIG. 13, the texture coordinates (0,0) of a sub mesh indicates the left bottom of the area indicated in the corresponding patch and (1,1) indicates the right top of the area indicated in the corresponding patch as shown in the left side of FIG. 13.

When asve_attribute_subtexture_enabled_flag[ attIdx ] is false, it is assumed that the texture coordinates of a sub mesh are based on the image size corresponding to the tile, this then invokes the texture coordinate adjustment process to renormalize the texture coordinates based on that.

In another embodiment, each tile can have its own indication equivalent to asve_attribute_subtexture_enabled_flag[ attIdx ] for the texture coordinate adjustment process.

*Re-Using Signaled Patch Location Information*

As an example, attribute information may be signaled per attribute using a syntax as shown below:

| afps_vdmc_extension( ) { |
|---|
| ... |
|     for( attrIdx=0; attrIdx< asve_num_attribute_video; attrIdx++ ) |
|         atlas_frame_attribute_tile_information( attrIdx ) |
| ... |
| } |

If multiple attributes have the same tile information, the tile information can be signaled once as described below for example. For the attrIdxB-th attribute, the tile information can be copied from the afve_reference_attribute_idx-th attribute. In such cases, afve_reference_attribute_idx is between 0 to afve_num_attributes_info-1, inclusive.

In another embodiment, the tile information of the geometry can be copied with an extended range of afve_reference_attribute_idx.

In another embodiment, sets of {tileOffsetX, tileOffsetY, tileWidth, and tileHeight} of the reference attribute can be copied instead of the individual syntax elements.

In another embodiment, the ratio between tileOffsetX and the nominal frame width of the reference attribute patch, the ratio between tileOffsetY and the nominal frame height of the reference attribute patch, the ratio between tileWidth and the nominal frame width of the reference attribute patch, and the ratio between tileHeight and the nominal frame width of the reference attribute patch can be used to derive sets of {tileOffsetX, tileOffsetY, tileWidth, and tileHeight} for the current attributes.

| afps_vdmc_extension( ) { |
|---|
| ... |
|     **afve_num_attributes_info** |
|     for( attrIdxA=0; attrIdxA< afve_num_attributes_info; attrIdxA++ ) |
|         atlas_frame_attribute_tile_information( attrIdxA ) |
|     for( attrIdxB= afve_num_attributes_info; attrIdxB< asve_num_attribute_video; attrIdxB++ ){ |
|         **afve_reference_attribute_idx** |
| ... |

(continued)

| |
|---|
| } |
| } |

In another embodiment, the attribute information in the patch can be signaled once if it can be shared by multiple attributes.

For iB between afve_num_attributes_info and asve_num_attribute_video-1, inclusive, the syntax elements can be derived as follows:

- mdu_attributes_2d_pos_x[ tileID ][ patchIdx ][ iB ] = mdu_attributes_2d_pos_x[ tileID ][ patchIdx ][ mdu_Reference_attribute_idx[tileID][patchIdx] ]
- mdu_attributes_2d_pos_y[ tileID ][ patchIdx ][ iB ] = mdu_attributes_2d_pos_y[ tileID ][ patchIdx ][ mdu_Reference_attribute_idx[tileID][patchIdx] ]
- mdu_attributes_2d_size_x_minus1[ tileID ][ patchIdx ][ iB ] = mdu_attributes_2d_size_x_minus1[ tileID ][ patchIdx ][ mdu_Reference_attribute_idx[tileID][patchIdx] ]
- mdu_attributes_2d_size_y_minus1[ tileID ][ patchIdx ][ iB ] = mdu_attributes_2d_size_y_minus1[ tileID ][ patchIdx ][ mdu_Reference_attribute_idx[tileID][patchIdx] ]

| |
|---|
| meshpatch_data_unit( tileID, patchIdx ) { |
| ... |
| if(mdu_transform_method[ tileID ][ patchIdx ]== LINEAR_LIFTING && mdu_transform_parameters_override_flag[ tileID ][ patchIdx ]) { |
| vdmc_lifting_transform_parameters(2, PatchSubdivisionCount[ tileID ][ patch Idx ] ) |
| } |
| for( iA=0; iA< afve_num_attributes_info; iA++ ){ |
| if( asve_attribute_subtexture_enabled_flag[ iA ] ){ |
| **mdu_attributes_2d_pos_x[** tileID ][ patchIdx ][ iA ] |
| **mdu_attributes_2d_pos_y[** tileID ][ patchIdx ][ iA ] |
| **mdu_attributes_2d_size_x_minus1[** tileID ][ patchIdx ][ iA ] |
| **mdu_attributes_2d_size_y_minus1[** tileID ][ patchIdx ][ iA ] |
| } |
| } |
| for( iB= afve_num_attributes_info; iB< asve_num_attribute_video; iB++ ){ |
| if( asve_attribute_subtexture_enabled_flag[ iB ] ){ |
| **mdu_reference_attribute_idx[** tileID ][ patchIdx ][ iB ] |
| } |
| } |
| ... |
| } |

The syntax element, afve_num_attributes_info, that indicates the number of attributes whose information is signaled can be signaled in AFPS(extension) or in the patch.

_Examples of Partial Signaling Using the Patch Data Unit_

In some embodiments, the patch data unit can be used to signal information for volumetric data, wherein a reconstructed patch is to be placed in 3D. Additionally, decoding and reconstruction information can be signaled in the patch data unit. For example, below is an example patch data unit.

```
meshpatch_data_unit( tileID, patchIdx ) {
        mdu_submesh_id[ tileID ][ patchIdx ]
        mdu_vertex_count_minus1[ tileID ][ patchIdx ]
        mdu_face_count_minus1[ tileID ][ patchIdx ]
        mdu_2d_pos_x[ tileID ][ patchIdx ]
        mdu_2d_pos_y[ tileID ][ patchIdx ]
        mdu_2d_size_x_minus1[ tileID ][ patchIdx ]
        mdu_2d_size_y_minus1[ tileID ][ patchIdx ]
        mdu_parameters_override_flag[ tileID ][ patchIdx ]
        if( mdu_parameters_override_flag[ tileID ][ patchIdx ] ){
          mdu_subdivision_override_flag[ tileID ][ patchIdx ]
          mdu_quantization_override_flag[ tileID ][ patchIdx ]
          mdu_transform_method_override_flag[ tileID ][ patchIdx ]
          mdu_transform_parameters_override_flag[ tileID ][ patchIdx ]
        }
        if( mdu_subdivision_override_flag[ tileID ][ patchIdx ] ){
          mdu_subdivision_method[ tileID ][ patchIdx ]
        if( mdu_subdivision_method[ tileID ][ patchIdx ] != 0 ){
          mdu_subdivision_iteration_count[ tileID ][ patchIdx ]
          PatchSubdivisionCount[ tileID ][ patchIdx ] =                mdu_subdivision_iteration_count[ tileID ][ patchIdx ]
        } else {
          PatchSubdivisionCount[ tileID ][ patchIdx ] = 0
        }
      } else {
          PatchSubdivisionCount[ tileID ][ patchIdx ] = AfpsSubdivisonCount
      }
        if(mdu_quantization_override_flag[ tileID ][ patchIdx ])
        vdmc_quantization_parameters(2, PatchSubdivisionCount[ tileID ][ patchIdx ] )
        mdu_displacement_coordinate_system[ tileID ][ patchIdx ]
        if(mdu_transform_method_override_flag[ tileID ][ patchIdx ])
          mdu_transform_method[ tileID ][ patchIdx ]
        if(mdu_transform_method[ tileID ][ patchIdx ]== LINEAR_LIFTING &&                mdu_transform_parameters_override_flag[ tileID ][ patchIdx ]) {
          vdmc_lifting_transform_parameters(2, PatchSubdivisionCount[ tileID ][ patch Idx ] )
        }
        for( i=0; i< asve_num_attribute_video; i++ ){
          if( asve_attribute_subtexture_enabled_flag[ i ] ){
            mdu_attributes_2d_pos_x[ tileID ][ patchIdx ][ i ]
            mdu_attributes_2d_pos_y[ tileID ][ patchIdx ][ i ]
            mdu_attributes_2d_size_x_minus1[ tileID ][ patchIdx ][ i ]
            mdu_attributes_2d_size_y_minus1[ tileID ][ patchIdx ][ i ]
```

(continued)

| |
|---|
| } |
| } |
| if( afve_projection_texcoord_present_flag[ smIdx ] ) |
| texture_projection_information( tileID, patchIdx ) |
| } |

In some embodiments, the patch data units can have one or more flags set to indicate that some of the syntax elements are not currently being signaled in that patch data unit. For example, below is an example syntax with a flag set.

| |
|---|
| meshpatch_data_unit( tileID, patchIdx ) { |
| **mdu_submesh_id**[ tileID ][ patchIdx ] |
| **mdu_vertex_process_information_present_flag**[ tileID ][ patchIdx ] |
| **mdu_attribute_image_information_present_flag** [ tileID ][ patchIdx ] |
| if(mdu_vertex_process_information_present_flag [ tileID ][ patchIdx ]{ |
| **mdu_vertex_count_minus1**[ tileID ][ patchIdx ] |
| **mdu_face_count_minus1**[ tileID ][ patchIdx ] |
| **mdu_2d_pos_x**[ tileID ][ patchIdx ] |
| **mdu_2d_pos_y**[ tileID ][ patchIdx ] |
| **mdu_2d_size_x_minus1**[ tileID ][ patchIdx ] |
| **mdu_2d_size_y_minus1**[ tileID ][ patchIdx ] |
| **mdu_parameters_override_flag**[ tileID ][ patchIdx ] |
| if( mdu_parameters_override_flag[ tileID ][ patchIdx ] ){ |
| **mdu_subdivision_override_flag**[ tileID ][ patchIdx ] |
| **mdu_quantization_override_flag**[ tileID ][ patchIdx ] |
| **mdu_transform_method_override_flag**[ tileID ][ patchIdx ] |
| **mdu_transform_parameters_override_flag**[ tileID ][ patchIdx ] |
| } |
| if( mdu_subdivision_override_flag[ tileID ][ patchIdx ] ){ |
| **mdu_subdivision_method**[ tileID ][ patchIdx ] |
| if( mdu_subdivision_method[ tileID ][ patchIdx ] != 0 ){ |
| **mdu_subdivision_iteration_count**[ tileID ][ patchIdx ] |
| PatchSubdivisionCount[ tileID ][ patchIdx ] = mdu_subdivision_iteration_count[ tileID ][ patchIdx ] |
| } else { |
| PatchSubdivisionCount[ tileID ][ patchIdx ] = 0 |
| } |
| } else { |
| PatchSubdivisionCount[ tileID ][ patchIdx ] = AfpsSubdivisonCount |
| } |
| if(mdu_quantization_override_flag[ tileID ][ patchIdx ]) |
| vdmc_quantization_parameters(2, PatchSubdivisionCount[ tileID ][ patchIdx ] ) |

(continued)

| |
|---|
| **mdu_displacement_coordinate_system**{[ tileID ][ patchIdx ] |
| if(mdu_transform_method_override_flag[ tileID ][ patchIdx ]) |
| **mdu_transform_method**[ tileID ][ patchIdx ] |
| if(mdu_transform_method[ tileID ][ patchIdx ]== LINEAR_LIFTING && mdu_transform_parameters_override_flag[ tileID ][ patchIdx ]) { |
| vdmc_lifting_transform_parameters(2, PatchSubdivisionCount[ tileID ][ patch Idx ] ) |
| } |
| } |
| if(mdu_attribute_image_information_present_flag[ tileID ][ patchIdx ]){ |
| for( i=0; i< asve_num_attribute_video; i++ ){ |
| if( asve_attribute_subtexture_enabled_flag[ i ] ){ |
| **mdu_attributes_2d_pos_x**[ tileID ][ patchIdx ][ i ] |
| **mdu_attributes_2d_pos_y**[ tileID ][ patchIdx ][ i ] |
| **mdu_attributes_2d_size_x_minus1**[ tileID ][ patchIdx ][ i ] |
| **mdu_attributes_2d_size_y_minus1**[ tileID ][ patchIdx ][ i ] |
| } |
| } |
| } |
| if(mdu_vertex_process_information_present_flag [ tileID ][ patchIdx ]) |
| if( afve_projection_texcoord_present_flag[ smIdx ] ) |
| texture_projection_information( tileID, patchIdx ) |
| } |

For example, mdu_vertex_process_information_present_flag [ tileID ][ patchIdx ] equals to 1 indicates some of the syntax elements that are related to processing of vertex position or texture coordinates are present in the patch data unit. mdu_attribute_image_information_present_flag[ tileID ][ patchIdx ] equals to 1 indicates some of the syntax elements that are related to the corresponding areas in the attribute images are present in the patch data unit. For this case, at least one of the flags need to be equal to 1.

When mdu_vertex_process_information_present_flag [ tileID ][ patchIdx ] equals to 0, the syntax elements that are not present in the bitstream are set as their respective default values. For example, if mdu_2d_pos_x[ tileID ][ patchIdx ] and mdu_2d_pos_y[ tileID ][ patchIdx ] are set as 0, then mdu_2d_size_x_minus1[ tileID ][ patchIdx ] and mdu_2d_size_y_minus1[ tileID ][ patchIdx ] can be set by the width and the height of the corresponding tile. And in that case the mdu_parameters_override_flag is set as 0.

When mdu_attribute_image_information_present_flag[ tileID ][ patchIdx ] equals to 0, asve_attribute_subtexture_enabled_flag[ i ] is inferred as 0.

In another embodiment, mdu_vertex_count_minus1 and mdu_face_count_minus1 are always signaled. For example, below is an example syntax.

| |
|---|
| meshpatch_data_unit( tileID, patchIdx ) { |
| mdu_submesh_id[ tileID ][ patchIdx ] |
| mdu_vertex_process_information_present_flag[ tileID ][ patchIdx ] |
| mdu_attribute_image_information_present_flag[ tileID ][ patchIdx ] |
| mdu_vertex_count_minus1[ tileID ][ patchIdx ] |
| mdu_face_count_minus1[ tileID ][ patchIdx ] |
| if(mdu_vertex_process_information_present_flag [ tileID ][ patchIdx ]{ |

(continued)

| ... |
|---|
| } |

In another embodiment, mdu_vertex_process_information_present_flag [ tileID ][ patchIdx ] indicates the presence of 4 syntax elements,e.g., mdu_2d_pos_x[ tileID ][ patchIdx ], mdu_2d_pos_y[ tileID ][ patchIdx ], mdu_2d_size_x_minus1[ tileID ][ patchIdx ], and mdu_2d_size_y_minus1[ tileID ][ patchIdx ]. For example:

| meshpatch_data_unit( tileID, patchIdx ) { |
|---|
| ... |
| mdu_vertex_process_information_present_flag [ tileID ][ patchIdx ] |
| if(mdu_vertex_process_information_present_flag [ tileID ][ patchIdx ]){ |
| mdu_2d_pos_x[ tileID ][ patchIdx ] |
| mdu_2d_pos_y[ tileID ][ patchIdx ] |
| mdu_2d_size_x_minus1[ tileID ][ patchIdx ] |
| mdu_2d_size_y_minus1[ tileID ][ patchIdx ] |
| } |
| ... |
| } |

In another embodiment, mdu_vertex_process_information_present_flag [ tileID ][ patchIdx ] can be controlled by another flag in the atlas sequence parameter set (ASPS) that is limited by a profile indicated in the video parameter set (VPS). For example, a flag can be signaled in the ASPS extension and it can be set 0 to when AC coded displacement bitstream is used. Then mdu_vertex_process_information_present_flag [ tileID ][ patchIdx ] is signaled based on the flag.

In another embodiement, instead of signaling mdu_vertex_process_information_present_flag [ tileID ][ patchIdx ], asve_geometry_image_information_present_flag can be directly used.

The process can be described as follows:

| asps_vdmc_extension( ) { |
|---|
| ... |
| asve_geometry_image_information_present_flag |
| ... |
| } |

| meshpatch_data_unit( tileID, patchIdx ) { |
|---|
| ... |
| if(asve_geometry_image_information_present_flag) |
| mdu_vertex_process_information_present_flag [ tileID ][ patchIdx ] |
| if(mdu_vertex_process_information_present_flag [ tileID ][ patchIdx ]){ |
| mdu_2d_pos_x[ tileID ][ patchIdx ] |
| mdu_2d_pos_y[ tileID ][ patchIdx ] |
| mdu_2d_size_x_minus1[ tileID ][ patchIdx ] |
| mdu_2d_size_y_minus1[ tileID ][ patchIdx ] |
| } |

(continued)

| | | |
|---|---|---|
| else | | |
| mdu_disp_idx | | |
| ... | | |
| } | | |

| | Profile Name | |
|---|---|---|
| Syntax element | ACCoded | ... |
| ... | | |
| asve_geometry_image_information_present_flag | 0 | 1 |
| ... | | |

In another embodiment, mdu_attribute_image_information_present_flag[ tileID ][ patchIdx ] can be signaled per attribute.

When mdu_vertex_process_information_present_flag and mdu_attribute_image_information_present_flag are signaled, there can be multiple patches in one tile that correspond to the same sub mesh, which means mdu_submesh_id[ tileID ][ patchIdx ] can be the same for multiple patches. In such a case, their mdu_vertex_process_information_present_flag and mdu_attribute_image_information_present_flag are exclusive. For example, if mdu_vertex_process_information_present_flag of one patch is true, mdu_vertex_process_information_present_flag of another patch is false.

In another embodiment, the vertex points reconstructed using the information in the patches can be concatenated to create one sub mesh.

When mdu_vertex_process_information_present_flag and mdu_attribute_image_information_present_flag are signaled, inter predicted patch data units can refer only to those patches mdu_vertex_process_information_present_flag and mdu_attribute_image_information_present_flag that are the same as the current patch.

In another embodiment, inter predicted patch data units can refer to any patches.

*Example Intra-Frame Encoder*

In some embodiments, intra-frame encoder 1402 receives a base mesh, displacements, the original static/dynamic mesh, and attribute map for a plurality of point-in-time frames. The base mesh is provided to quantization module 1404, wherein aspects of the base mesh may (optionally) be further quantized. In some embodiments, various mesh encoders may be used to encode the base mesh. Also, in some embodiments, intra-frame encoder 1402 may allow for customization, wherein different respective mesh encoding schemes may be used to encode the base mesh. For example, base mesh encoder 1406 may be a selected mesh encoder selected from a set of viable mesh encoder, such as a DRACO encoder (or another suitable encoder). The encoded base mesh, that has been encoded by base mesh encoder 1406 is provided to multiplexer (MUX) 1438 for inclusion in the compressed bitstream. Additionally, the encoded base mesh is provided to base mesh decoder in order to generate a reconstructed version of the base mesh (that a decoder will see). This reconstructed version of the base mesh is used to determine the displacements such that they take into account any geometric distortion between the original base mesh and a reconstructed version of the base mesh (that a decoder will see). For example, base mesh decoder 1408 generates a reconstructed quantized base mesh and provides the reconstructed quantized base mesh to displacement update module 1410, which also receives the original base mesh and the original displacement. The displacement update module 1410 compares the reconstructed quantized base mesh (that the decoder will see) to the base mesh and adjusts the displacements to account for differences between the base mesh and the reconstructed quantized base mesh. These updated displacements are provided to wavelet transform 1412 which applies a wavelet transformation to further compress the updated displacements and outputs wavelet coefficients, which are provided to quantization module 1414 which generates quantized wavelet coefficients. The quantized wavelet coefficients may then be packed into a 2D image frame via image packing module 1416, wherein the packed 2D image frame is further video encoded via video encoding 1418. The encoded video images are also provided to multiplexer (MUX) 1438 for inclusion in the compressed bit stream. Also, in some embodiments, the displacement values (such as are indicated in the generated quantized wavelet coefficients or indicated using other compression schemes) may be encoded at least partially outside of the video sub-bitstream, such as in their own displacement data sub-bitstream, in the base mesh sub-bitstream, or in an atlas data sub-bitstream.

In addition, in order to account for any geometric distortion introduced relative to the original static/dynamic mesh, an attribute transfer process 1430 may be used to modify attributes to account for differences between a reconstructed deformed mesh and the original static/dynamic mesh.

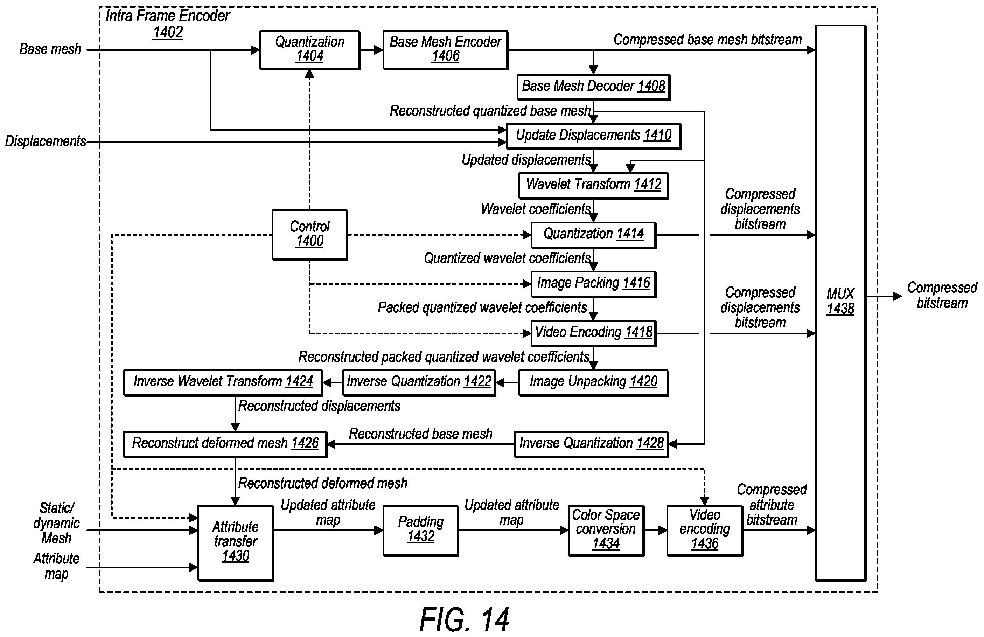

For example, video encoding 1418 may further perform video decoding (or a complimentary video-decoding module may be used (which is not shown in FIG. 14)). This produces reconstructed packed quantized wavelet coefficients that are unpacked via image unpacking module 1420. Furthermore, inverse quantization may be applied via inverse quantization module 1422 and inverse wavelet transform 1424 may be applied to generate reconstructed displacements. In some embodiments, other decoding techniques may be used to generate reconstructed displacements, such as decoding displacements signaled in atlas data sub-bitstream, a displacement data sub-bitstream, or the base mesh-sub-bitstream. Also, the reconstruction of base mesh 1409 by the static mesh decoder 1408 to generate a reconstructed quantized base mesh may be inverse quantized via inverse quantization module 1428 to generate a reconstructed base mesh. The reconstructed deformed mesh generation module 1426 applies the reconstructed displacements to the reconstructed base mesh to generate the reconstructed deformed mesh. Note that the reconstructed deformed mesh represents the reconstructed mesh that a decoder will generate, and accounts for any geometric deformation resulting from losses introduced in the encoding process.

Attribute transfer module 1430 compares the geometry of the original static/dynamic mesh to the reconstructed deformed mesh and updates the attribute map to account for any geometric deformations, this updated attribute map is output as an updated attribute map. The updated attribute map is then padded, wherein a 2D image comprising the attribute images is padded such that spaces not used to communicate the attribute images have a padding applied. In some embodiments, a color space conversion is optionally applied at color space conversion module 1434. For example, an RGB color space used to represent color values of the attribute images may be converted to a YCbCr color space, also color space sub-sampling may be applied such as 10:2:0, 10:0:0, etc. color space sub-sampling. The updated attribute map that has been padded and optionally color space converted is then video encoded via video encoding module 1436 and is provided to multiplexer 1438 for inclusion in compressed bitstream .

In some embodiments, a controller 1400 may coordinate the various quantization and inverse quantization steps as well as the video encoding and decoding steps such that the inverse quantization "undoes" the quantization and such that the video decoding "undoes" the video encoding. Also, the attribute transfer module 1430 may take into account the level of quantization being applied based on communications from the controller 1400.

*Example Intra-Frame Decoder*

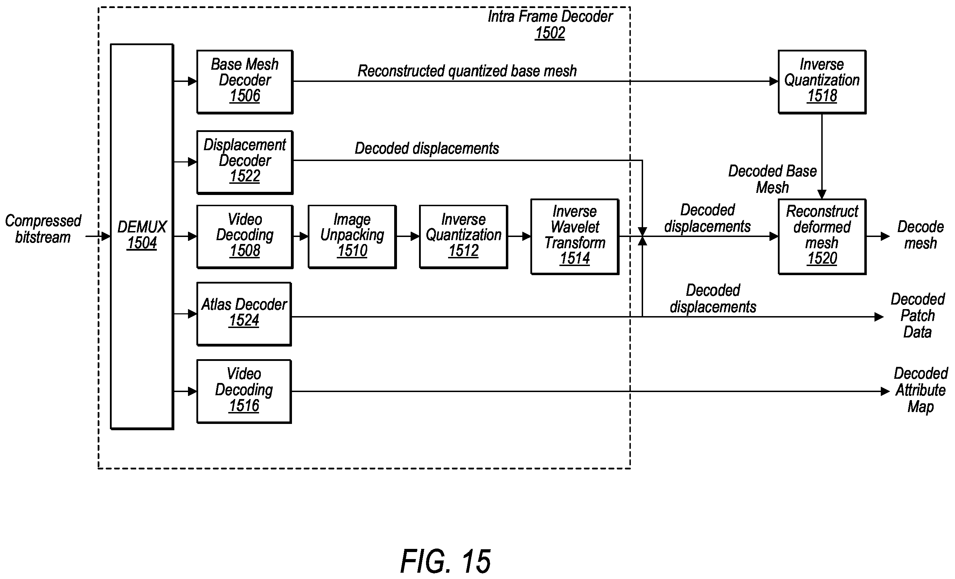

FIG. 15 illustrates an example intra-frame decoder for decoding a three-dimensional mesh, according to some embodiments.

Intra frame decoder 1502 receives a compressed bitstream, such as the compressed bit stream generated by the intra frame encoder 1402 shown in FIG. 14. Demultiplexer (DEMUX) 1504 parses the bitstream into a base mesh sub-component, a displacement sub-component, and an attribute map sub-component. In some embodiments, the displacement sub-component may be signaled in a displacement data sub-bitstream or may be at least partially signaled in other sub-bitstreams, such as an atlas data sub-bitstream, a base mesh sub-bitstream, or a video sub-bitstream. In such a case, displacement decoder 1522 decodes the displacement sub-bitstream and/or atlas decoder 1524 decodes the atlas sub-bitstream.

Base mesh decoder 1506 decodes the base mesh sub-component to generate a reconstructed quantized base mesh, which is provided to inverse quantization module 1518, which in turn outputs decoded base mesh and provides it to reconstructed deformed mesh generator 1520.

In some embodiments, a portion of the displacement sub-component of the bit stream is provided to video decoding 1508, wherein video encoded image frames are video decoded and provided to image unpacking 1510. Image unpacking 1510 extracts the packed displacements from the video decoded image frame and provides them to inverse quantization 1512 wherein the displacements are inverse quantized. Also, the inverse quantized displacements are provided to inverse wavelet transform 1514, which outputs decoded displacements. Reconstructed deformed mesh generator 1520 applies the decoded displacements to the decoded base mesh to generate a reconstructed static/dynamic mesh. The decoded displacement may come from any combination of the video sub-bitstream, the atlas data sub-bitstream, the base-mesh sub-bitstream and/or a displacement data sub-bitstream. Also, the attribute map sub-component is provided to video decoding 1516, which outputs a decoded attribute map. A reconstructed version of the three-dimensional visual content can then be rendered at a device associated with the decoder using the decoded mesh and the decoded attribute map.

As shown in FIG. 15, a bitstream is de-multiplexed into three or more separate sub-streams:

- mesh sub-stream,
- displacement sub-stream for positions and potentially for each vertex attribute, and

- attribute map sub-stream for each attribute map.

The mesh sub-stream is fed to the mesh decoder to generate the reconstructed quantized base mesh. The decoded base mesh is then obtained by applying inverse quantization. The proposed scheme is agnostic of which mesh codec is used. The mesh codec used could be specified explicitly in the bitstream or could be implicitly defined/fixed by the specification or the application.

The displacement sub-stream could be decoded by a video/image decoder. The generated image/video is then un-packed and inverse quantization is applied to the wavelet coefficients. In an alternative embodiment, the displacements could be decoded by dedicated displacement data decoder or the atlas decoder. The proposed scheme is agnostic of which codec/standard is used. Image/video codecs such as [HEVC] [AVC] [AV1] [AV2] [JPEG] [JPEG2000] could be used. A motion decoder used for decoding mesh motion information or a dictionary-based decoder such as ZIP could be for example used as the dedicated displacement data decoder. The decoded displacement is then generated by applying the inverse wavelet transform to the unquantized wavelet coefficients. The final decoded mesh is generated by applying the reconstruction process to the decoded base mesh and adding the decoded displacement field.

The attribute sub-stream is directly decoded by the video decoder and the decoded attribute map is generated as output. The proposed scheme is agnostic of which codec/standard is used. Image/video codecs such as [HEVC] [AVC] [AV1] [AV2] [JPEG] [JPEG2000] could be used. Alternatively, an attribute sub-stream could be decoded by using non-image/video decoders (e.g., using a dictionary-based decoder such as ZIP). Multiple sub-streams, each associated with a different attribute map, could be decoded. Each sub-stream could use a different codec.

*Example Inter-Frame Encoder*

FIG. 16 illustrates an example inter-frame encoder, according to some embodiments. Note that a given device may implement both intra-frame encoding and inter-frame encoding and may choose intra-frame or inter-frame encoding, respectively, for different respective point-in-time frames, based on which method provides better compression efficiency, quality, etc.

In some embodiments, inter frame encoder 1602 may include similar components as the intra-frame encoder 1402, but instead of encoding a base mesh, the inter-frame encoder may encode motion vectors that can be applied to a reference mesh to generate, at a decoder, a base mesh. Also, as discussed above, in some embodiments, displacements may not be signaled explicitly for each point-in-time frame, but may instead be predicted, using inter-frame prediction, based on displacements of a reference frame. In such embodiments, residual values for the vertices displacements may be grouped into patches, packed into a 2D video image frame and video encoded.

For example, in the case of dynamic meshes, a temporally consistent re-meshing process is used, which may produce a same subdivision structure that is shared by the current mesh and a reference mesh. Such a coherent temporal re-meshing process makes it possible to skip the encoding of the base mesh and re-use the base mesh associated with the reference frame. This could also enable better temporal prediction for both the attribute and geometry information. More precisely, a motion field describing how to move the vertices of the base mesh to match the positions of the vertices in the current moment in times' base mesh may be computed and encoded. Such processes are described in FIG. 16. For example, motion encoder 1606 may generate a motion field describing how to move the vertices of the reference base mesh to match the positions of the current moment in time's base mesh.

In some embodiments, the base mesh associated with the current frame is first quantized (e.g., using uniform quantization) and encoded by using a static mesh encoder. The proposed scheme is agnostic of which mesh codec is used. The mesh codec used could be specified explicitly in the bitstream by encoding a mesh codec ID or could be implicitly defined/fixed by the specification or the application.

Depending on the application and the targeted bitrate/visual quality, the encoder could optionally encode a set of displacement vectors associated with the subdivided mesh vertices, referred to as the displacement field.

In some embodiments, a motion decoder 1608 performs reconstruction of base mesh 1409 and the reconstructed quantized base mesh (e.g., output of the reconstruction of base mesh 1409) is then used to update the displacement field (at update displacements module 1410) to generate an updated displacement field so that it takes into account the differences between the reconstructed base mesh and the original base mesh. By exploiting the subdivision surface mesh structure, a wavelet transform is then applied, at wavelet transform 1412, and a set of wavelet coefficients are generated. The wavelet coefficients are then quantized, at quantization 1414, packed into a 2D image/video (at image packing 1416), and compressed by using an image/video encoder (at video encoding 1418). The encoding of the wavelet coefficients may be lossless or lossy. The reconstructed version of the wavelet coefficients is obtained by applying image unpacking and inverse quantization to the reconstructed wavelet coefficients video generated during the video encoding process (e.g., at 1420, 1422, and 1424). Reconstructed displacements are then computed by applying the inverse wavelet transform to the reconstructed wavelet coefficients. A reconstructed base mesh is obtained by applying inverse quantization to the reconstructed quantized base mesh. The reconstructed deformed mesh is obtained by subdividing the updated base mesh and applying the reconstructed displacements to its vertices (e.g. sub-division locations).

Since the quantization step or/and the mesh compression module may be lossy, a reconstructed quantized version of the base mesh is computed.

As shown in FIG. 16 a reconstructed quantized reference base mesh is used to predict the current frame base mesh.

*Example Inter-Frame Decoder*

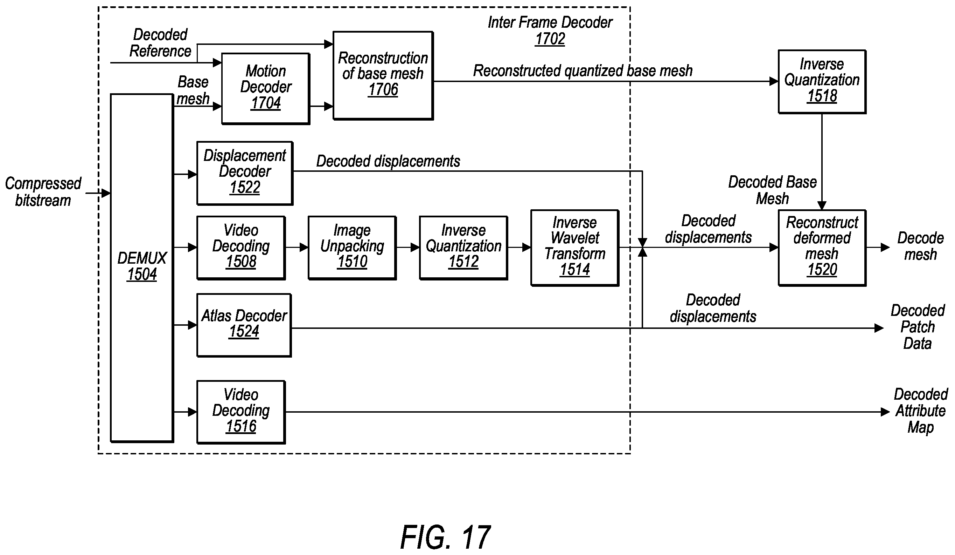

FIG. 17 illustrates an example inter-frame decoder for decoding a three-dimensional mesh, according to some embodiments.

Inter frame decoder 1702 includes similar components as intra frame decoder 1502 shown in FIG. 15. However, instead of receiving a directly encoded base mesh, the inter frame decoder 1702 reconstructs a base mesh for a current frame based on motion vectors of a displacement field relative to a reference frame. For example, inter-frame decoder 1702 includes motion field/vector decoder 1704 and reconstruction of base mesh module 1706.

In a similar manner to the intra-frame decoder, the inter-frame decoder 1702 separates the bitstream into three separate sub-streams:

- a motion sub-stream,
- a displacement sub-stream, and
- an attribute sub-stream.

The motion sub-stream is decoded by applying the motion decoder 1704. The proposed scheme is agnostic of which codec/standard is used to decode the motion information. For instance, any motion decoding scheme could be used. The decoded motion is then optionally added to the decoded reference quantized base mesh to generate the reconstructed quantized base mesh e.g., the already decoded mesh at frame index j can be used for the prediction of the mesh at frame index i. Afterwards, the decoded base mesh is generated by applying the inverse quantization.

*Example Multi-Frame Inter-Prediction Encoder*

The displacement and attribute sub-streams are decoded in a similar manner as in the intra frame decoding process described with regard to FIG. 15. The decoded mesh is also reconstructed in a similar manner.

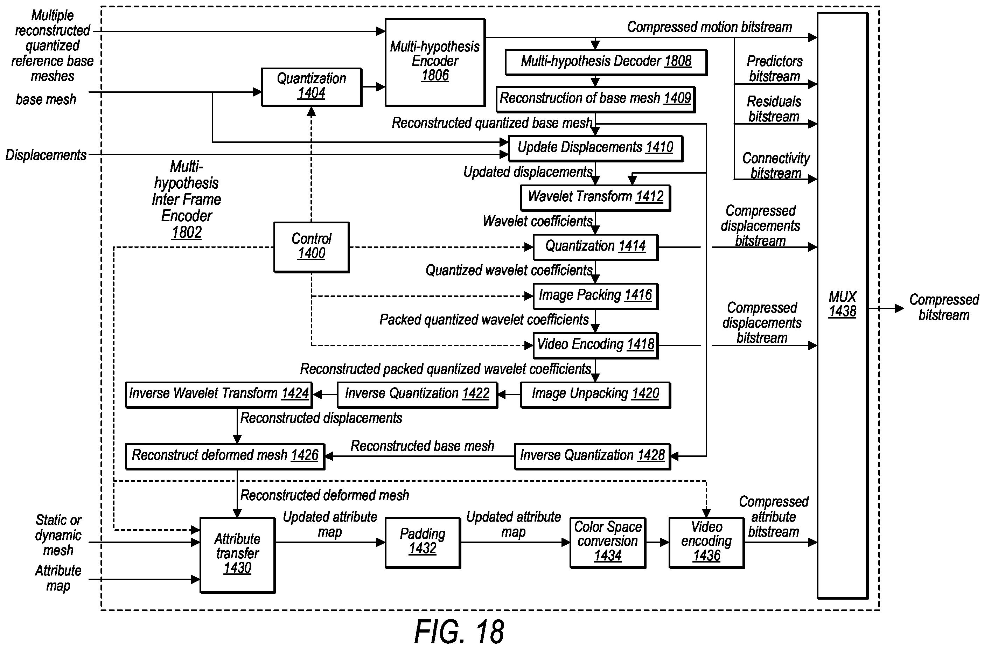

FIG. 18 illustrates an example multi-hypothesis inter-frame encoder, according to some embodiments.

In some embodiments, multi-hypothesis inter frame encoder 1802 may include similar components as the inter-frame encoder 1602 but may apply multi-hypothesis inter-prediction as discussed above in FIGS. 1-8. For example, instead of using a single reference base mesh, a multi-hypothesis encoder 1806 may perform multi-hypothesis inter-prediction (as discussed above in FIGS. 1-8) to generate, at a decoder, a base mesh. Moreover, a multi-hypothesis decoder 1808 generates a reconstructed quantized base mesh based on multiple reference meshes (or multiple vertices from a single reference mesh as discussed above in FIG. 4) and provides the reconstructed quantized base mesh m'(i) to displacement update module 1410, which also receives the original base mesh and the original displacement. In some embodiments, the multi-hypothesis encoder 1806 may provide the displacement multiplexer 1438 for inclusion in compressed bitstream b(i). In some embodiments, a multi-hypothesis predictors may be provided to the multiplexer 1438 for inclusion in compressed bitstream. The multi-hypothesis texture coordinate predictors may indicate the one or more preceding point-in-time frames from which texture coordinate values or texture connectivity information should be obtained from, as discussed in FIGS. 7-8.

*Example Multi-Frame Inter-Prediction Decoder*

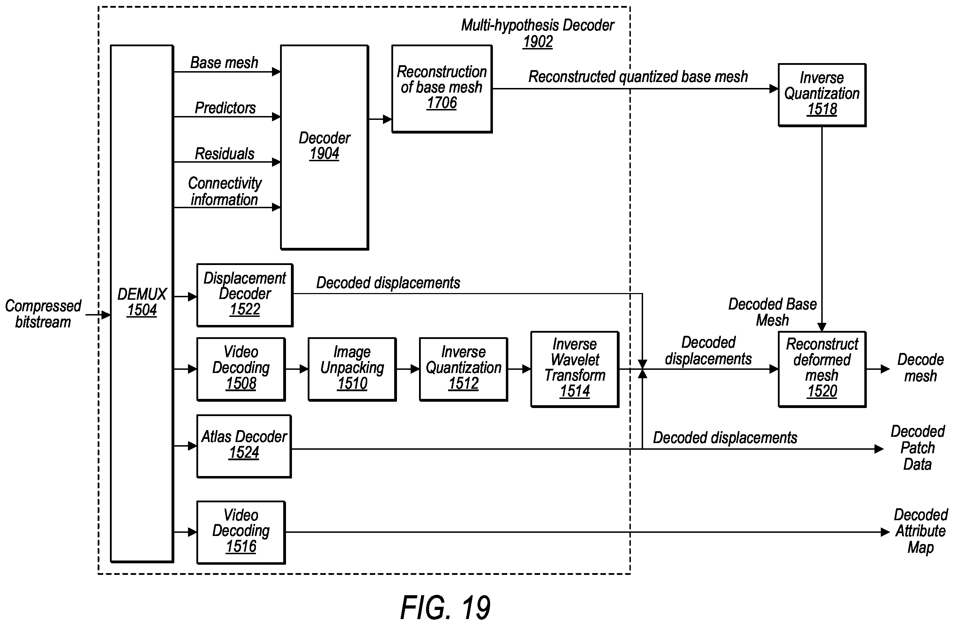

FIG. 19 illustrates an example multi-hypothesis decoder for decoding a three-dimensional mesh, according to some embodiments.

Multi-hypothesis decoder 1902 includes similar components as inter frame decoder 1702 shown in FIG. 17. However, instead of reconstructing a base mesh for a frame of a given index based on motion vectors of a displacement field relative to a reference frame, the multi-hypothesis decoder 1902 reconstructs a base mesh for a frame of a given index based on reference meshes from different frame(s) at one or more indices using multi-hypothesis techniques described in FIGS. 1-8. For example, multi-hypothesis inter-frame decoder 1902 may use a decoder 1904 that uses predictors indicating vertices from frames at different frame indices (or multiple vertices for a frame) for reconstruction of the base mesh 1706.

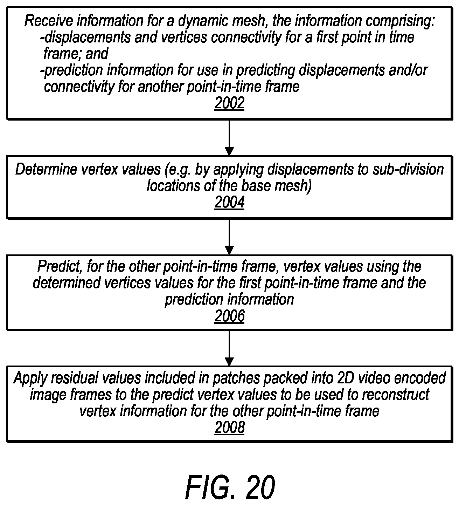

FIG. 20 is a flow diagram illustrating an example process of reconstructing a dynamic mesh using inter-prediction, according to some embodiments.

At block 2002, a decoder receives information for a dynamic mesh (e.g. that has been compressed using inter-prediction). The received information includes displacement values and vertices connectivity information for a first point in time frame. For example, this may be signaled using a base mesh and displacement to be applied to sub-division locations of the base mesh. Also, the received information includes prediction information to be used to in predicting displacements and/or connectivity for another point-in time frame.

At block 2004, the decoder determines vertex values for the first point-in-time frame's version of the dynamic mesh. For example, by using inter-prediction or intra-prediction as described above with regard to example intra-frame decoders shown in FIGs. 15 or 17.

At block 2006, the decoder predicts vertex values for the other (e.g. subsequent) point-in-time frames. This is performed using the vertices values determined for the first point-in-time frame and using the prediction information received at block 2002. In some embodiments, a multi-frame inter-prediction process as described in FIG. 19 and FIGs. 1-8. In some embodiments, displacement values for the other point in time may be inter-predicted from displacements signaled in the first point-in-time frame.

At block 2008, the decoder applies residual values (e.g. that have been grouped into patches and packed into 2D video image frames) to the vertices values predicted at block 2006. The vertices values with the residuals applied are then used to reconstruct the dynamic mesh version corresponding to the other point-in-time frame.

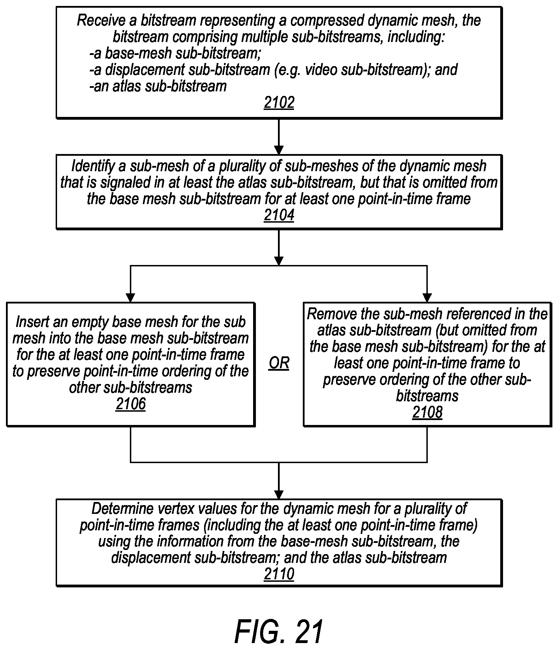

FIG. 21 is a flow diagram illustrating an example process of reconstructing a dynamic mesh, wherein at least some sub-meshes have base meshes omitted from the base mesh sub-bitstream for at least some point-in-time frames, according to some embodiments.

At block 2102, a decoder receives information for a dynamic mesh (e.g. that has been compressed using inter-prediction). The received information includes a base-mesh sub-bitstream, a displacement sub-bitstream (e.g. video encoded images comprising 2D frame packed with patches, each comprising information for determining a displacement value to be applied to a base mesh subdivision location to locate a vertex in 3D space), and an atlas sub-bitstream comprising information for locating patches from the displacement sub-bitstream and applying them to the correct corresponding subdivision locations of the base meshes of the base mesh sub-bitstream. In some embodiments, the dynamic mesh may be subdivided into sub-meshes and for each sub-mesh, a base mesh, displacements, and atlas information are signaled in the respective sub-bitstreams.

At block 2104, the decoder identifies a sub-mesh for which atlas information is signaled in the atlas sub-bitstream, but a corresponding base mesh is not signaled in the base mesh sub-bitstream for at least one point in time frame.

At block 2106, in order to resolve the mismatch across sub-bitstreams, the decoder inserts an empty base mesh for the sub-mesh into the base mesh sub-bitstream for the at least one point in time frame that was missing a corresponding base mesh for that sub-mesh. This preserves the ordering of the point in time frames of the respective sub-bitstreams.

Alternatively, at block 2108, the decoder removes the sub-mesh from the atlas sub-bitstream for the at least one point in time frame to preserve the ordering of the point in time frames of the of the respective sub-bitstreams. For example, in some situations, the missing sub-mesh may be being predicted using inter-prediction such that a base mesh does not need to be signaled for a given point in-time frame.

At block 2110, the decoder then determines vertex values for the dynamic mesh for a plurality of moment in time (including the moment in time for which the base mesh was omitted for at least one sub-mesh). The dynamic mesh is reconstructed using the information from the base-mesh sub-bitstream, the displacement sub-bitstream, and the atlas sub-bitstream (e.g. with the ordering of the point in time frames of the respective sub-bitstreams preserved).

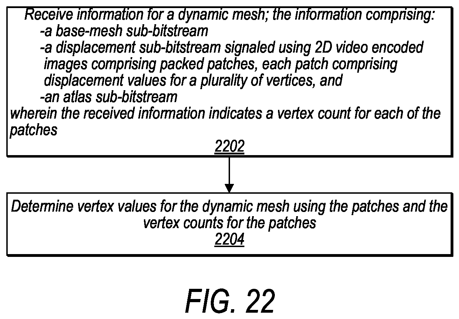

FIG. 22 is a flow diagram illustrating an example process of reconstructing a dynamic mesh, wherein vertices counts are signaled per patch, according to some embodiments.

At block 2202, a decoder receives information for a dynamic mesh (e.g. that has been compressed using inter-prediction). The received information includes a base mesh sub-bitstream, a displacement sub-bitstream, and an atlas sub-bitstream. The displacement sub-bitstream is signaled using video encoded 2D images, wherein respective ones of the 2D images include packed patches, and wherein the packed patches include residual values used in reconstructing displacement values for respective vertices of the dynamic mesh at respective points in time. Also, the received information includes information for use in determining vertices counts for each of the patches (e.g. independently being able to determine vertices counts for respective patches).

At block 2204, the decoder determines vertex values for the dynamic mesh using the patches and signaled vertices counts for the respective patches.

Embodiments of the present disclosure can be described in view of the following clauses:

1. A non-transitory, computer-readable, storage medium storing program instructions that, when executed using one or more computing devices, cause the one or more computing devices to:

receive information for a compressed version of a dynamic mesh, the information comprising:

vertices location and connectivity information for a first frame;
vertices location and connectivity information for one or more additional frames; and
multi-frame prediction information for predicting vertices location information for another frame using multiple preceding frames and an indication of vertices connectivity information to be used for the other frame;

determine 3-dimensional (3D) vertex values for a first version of the dynamic mesh corresponding to the first frame using the vertices location and connectivity information for the first frame;
determine 3D vertex values for one or more additional versions of the dynamic mesh corresponding to the one or more additional frames using the vertices location and connectivity information for the one or more additional frames; and
determine 3D vertex values for another version of the dynamic mesh corresponding to the other frame, wherein said determination comprises:
predicting, for one or more vertices of the other version of the dynamic mesh, one or more vertices locations using previously determined 3D vertex values from at least two different ones of the dynamic mesh corresponding to the first frame and the one or more additional frames.

2. The non-transitory, computer-readable, storage medium of clause 1, wherein the vertices location for the first frame and/or the vertices location for the one or more additional frames are determined using inter-prediction and/or intra-prediction.

3. The non-transitory, computer-readable, storage medium of clause 1, wherein the program instructions, when executed using the one or more computing devices, further cause the one or more computing devices to:

receive other information for the compressed version of the dynamic mesh, the other information comprising:
single-reference frame multi-vertices prediction information for predicting vertices location information for a third frame using multiple vertices of a single preceding frame; and
determine 3D vertex values for a third version of the dynamic mesh corresponding to the third frame, wherein said determination comprises:
predicting, for one or more vertices of the third version of the dynamic mesh, one or more vertices locations using at least two different vertices from the single preceding frame.

4. The non-transitory, computer-readable, storage medium of clause 1, wherein the program instructions, when executed using the one or more computing devices, further cause the one or more computing devices to:
determine one or more texture coordinate values for the other version of the dynamic mesh corresponding to the other frame, wherein said determination comprises:
predicting, for one or more texture coordinates of the other version of the dynamic mesh, the one or more texture coordinate values using texture coordinate values from at least two different versions of the dynamic mesh corresponding to the first frame and the one or more additional frames.

5. The non-transitory, computer-readable, storage medium of clause 4, wherein predicting the one or more texture coordinate values further comprises taking an average of the coordinate values from the at least two different ones of for the dynamic mesh corresponding to the first frame and the one or more additional frames.

6. The non-transitory, computer-readable, storage medium of clause 1, wherein:

the received information for the compressed version of the dynamic mesh comprises an indication for one or more preceding frames prior to the other frames to be used to determine one of more of:

the vertices connectivity information for the other version of the dynamic mesh corresponding to the other frame,
texture coordinate values for the other version of the dynamic mesh corresponding to the other frame, or
texture connectivity information for the other version of the dynamic mesh corresponding to the other frame; and

the program instructions, when executed using the one or more computing devices, further cause the one or more computing devices to:
determine the vertices connectivity information, the texture coordinate values, or the texture connectivity information for the other version of the dynamic mesh based on the indication for the one or more preceding frames.

7. The non-transitory, computer-readable, storage medium of clause 1, the program instructions, when executed using the one or more computing devices, further cause the one or more computing devices to:
determine mesh connectivity information, texture coordinate values, or texture connectivity information for the other version of the dynamic mesh based on a preestablished rule, wherein the preestablished rule indicates that mesh connectivity information, texture coordinate values, or texture connectivity of a dynamic mesh corresponding to a preceding frame that is spatially or temporally closest to the other frame is to be used as the vertices connectivity information, the texture coordinate values, or the texture connectivity information for the other version of the dynamic mesh.

8. The non-transitory, computer-readable, storage medium of clause 1, wherein the information for the compressed version of the dynamic mesh comprises:

a base mesh sub-bitstream for reconstructing a base mesh for the dynamic mesh; a a displacement sub-bitstream that comprises information for vectors to be applied at subdivision points of the base mesh to reconstruct the dynamic mesh; and
wherein the vertices location for the first frame, the vertices location for one or more additional frames, and the multi-frame prediction information for predicting vertices location information are encoded in the base mesh sub-bitstream and/or the displacement sub-bitstream.

9. The non-transitory, computer-readable, storage medium of clause 8, wherein the information for the compressed version of the dynamic mesh comprises:

an atlas sub-bitstream for reconstructing atlas information for the dynamic mesh;
wherein the program instructions, when executed using the one or more computing devices, further cause the one or more computing devices to:

determine a sub-mesh of a plurality of sub-meshes that is signaled in an atlas sub-bitstream but that is not signaled in the base mesh sub-bitstream; and
based on the said determination:

use an empty sub-mesh as part of the base mesh sub-bitstream to correspond to the sub-mesh referenced in the atlas sub-bitstream; or
remove the sub-mesh referenced in the atlas sub-bitstream from the atlas sub-bitstream.

10. The non-transitory, computer-readable, storage medium of clause 1, wherein the program instructions, when executed using the one or more computing devices, further cause the one or more computing devices to:
determine one or more predictors used to predict the one or more vertices of the other version of the dynamic mesh corresponding to the other frame, wherein said determination comprises:
predicting the one or more predictors using:

at least two different predictors corresponding to the first frame and the one or more additional frames;
single-reference frame multi-vertices prediction;
single-reference frame inter-prediction; or
intra-prediction.

11. The non-transitory, computer-readable, storage medium of clause 1, wherein the program instructions, when executed using the one or more computing devices, further cause the one or more computing devices to:
determine one or more residuals used to correct the predicted one or more vertices locations of the other version of the dynamic mesh to determine the 3D vertex values for the other version of the dynamic mesh, wherein said determination of the one or more residuals comprises:
predicting the one or more residuals using:

at least two different residuals corresponding to the first frame and the one or more additional frames;
single-reference frame multi-vertices prediction;
single-reference frame inter-prediction; or
intra-prediction.

12. The non-transitory, computer-readable, storage medium of clause 1, wherein the multi-frame prediction information for predicting the vertices location information for the other frame comprises one or more functions for predicting the one or more vertices of the other version of the dynamic mesh, wherein the one or more functions indicate differing weights to be applied to the previously determined 3D vertex values from the at least two different ones of for the dynamic mesh corresponding to the first frame and the one or more additional frames, wherein the differing weights correspond to temporal distance between the respective frame and the other frame.

13. A non-transitory, computer-readable, storage medium storing program instructions that, when executed using one or more computing devices, cause the one or more computing devices to:

compress 3D vertex values for a first frame, one or more additional frames, and another frame of a dynamic mesh, wherein said compression comprises:

predicting, for the other version of the dynamic mesh, one or more 3D vertex values of the other version of the dynamic mesh, using location information from at least two different ones of the dynamic mesh corresponding to the first frame and the one or more additional frames; and
determining residual values for the other version of the dynamic mesh based on the predicted one or more 3D vertex values and one or more uncompressed 3D vertex values; and

signal information for a compressed version of a dynamic mesh, the information comprising:

vertices location and connectivity information for the first frame;
vertices location and connectivity information for the one or more additional frames; and
the determined residual values.

14. The non-transitory, computer-readable, storage medium of clause 13, wherein the signaled information further comprises:
multi-frame prediction information for predicting vertices location information for another frame using multiple preceding frames and an indication of vertices connectivity information to be used for the other frame.

15. The non-transitory, computer-readable, storage medium of clause 13, wherein the signaled information further comprises:
prediction information for predicting one or more residuals, using at least two different residuals corresponding to the first frame and the one or more additional frames.

16. The non-transitory, computer-readable, storage medium of clause 13, wherein the signaled information further comprises:
prediction information for predicting one or more predictors, using at least two different predictors corresponding to the first frame and the one or more additional frames.

17. A method comprising:

receiving information for a compressed version of a dynamic mesh, the information comprising:

vertices location and connectivity information for a first frame;
vertices location and connectivity information for one or more additional frames; and
multi-frame prediction information for predicting vertices location information for another frame using multiple preceding frames and an indication of vertices connectivity information to be used for the other frame;

determining 3-dimensional (3D) vertex values for a first version of the dynamic mesh corresponding to the first frame using the vertices location and connectivity information for the first frame;
determining 3D vertex values for one or more additional versions of the dynamic mesh corresponding to the one or more additional frames using the vertices location and connectivity information for the one or more additional frames; and
determining 3D vertex values for another version of the dynamic mesh corresponding to the other frame, wherein said determining comprises:
predicting, for one or more vertices of the other version of the dynamic mesh, one or more vertices locations using previously determined

3D vertex values from at least two different ones of the dynamic mesh corresponding to the first frame and the one or more additional frames.

18. The method of clause 17, wherein the vertices location for the first frame and/or the vertices location for the one or more additional frames are determined using inter-prediction and/or intra-prediction.

19. The method of clause 17, further comprising:

receiving other information for the compressed version of the dynamic mesh, the other information comprising:
single-reference frame multi-vertices prediction information for predicting vertices location information for a third frame using multiple vertices of a single preceding frame; and
determining 3D vertex values for a third version of the dynamic mesh corresponding to the third frame, wherein said determining comprises:
predicting, for one or more vertices of the third version of the dynamic mesh, one or more vertices locations using at least two different vertices from the single preceding frame.

20. The method of clause 17, further comprising:
determining one or more texture coordinate values for the other version of the dynamic mesh corresponding to the other frame, wherein said determining comprises:
predicting, for one or more texture coordinates of the other version of the dynamic mesh, the one or more texture coordinate values using texture coordinate values from at least two different versions of the dynamic mesh corresponding to the first frame and the one or more additional frames.

21. The method of clause 17, wherein the vertices location for the first frame and the vertices location for the one or more additional frames are signaled in the information per triangles of the dynamic mesh.

22. The method of clause 17, wherein the received information for the compressed version of the dynamic mesh indicates texture coordinate values for the other version of the dynamic mesh corresponding to the other frame, wherein the texture coordinate values are signaled in the information per triangles of the dynamic mesh.

23. The method of clause 22, wherein the information for the compressed version of the dynamic mesh indicates, that at least a portion of the texture coordinate values for the other version of the dynamic mesh corresponding to the other frame are translated and/or rotated.

24. The method of clause 22, wherein texture coordinate values for the other version of the dynamic mesh corresponding to the other frame are signaled in a different bitstream than a base mesh sub-bitstream.

Example Computer System

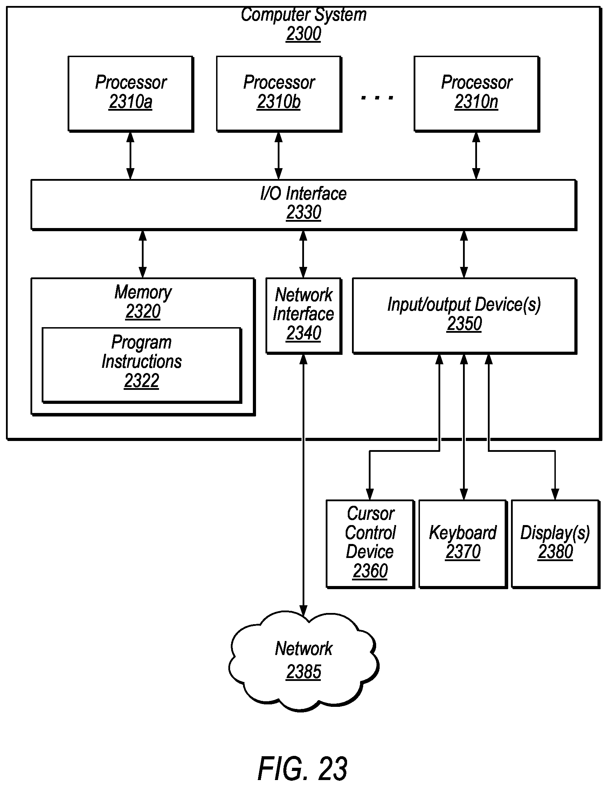

FIG. 23 illustrates an example computer system 2300 that may implement an encoder or decoder or any other ones of the components described herein, (e.g., any of the components described above with reference to FIGS. 1-22), in accordance with some embodiments. The computer system 2300 may be configured to execute any or all of the embodiments described above. In different embodiments, computer system 2300 may be any of various types of devices, including, but not limited to, a personal computer system, desktop computer, laptop, notebook, tablet, slate, pad, or netbook computer, mainframe computer system, handheld computer, workstation, network computer, a camera, a set top box, a mobile device, a consumer device, video game console, handheld video game device, application server, storage device, a television, a video recording device, a peripheral device such as a switch, modem, router, or in general any type of computing or electronic device.

Various embodiments of a point cloud encoder or decoder, as described herein may be executed in one or more computer systems 2300, which may interact with various other devices. Note that any component, action, or functionality described above with respect to FIGS. 1-22 may be implemented on one or more computers configured as computer system 2300 of FIG. 23, according to various embodiments. In the illustrated embodiment, computer system 2300 includes one or more processors 2310 coupled to a system memory 2320 via an input/output (I/O) interface 2330. Computer system 2300 further includes a network interface 2340 coupled to I/O interface 2330, and one or more input/output devices 2350, such as cursor control device 2360, keyboard 2370, and display(s) 2380. In some cases, it is contemplated that embodiments may be implemented using a single instance of computer system 2300, while in other embodiments multiple such systems, or multiple nodes making up computer system 2300, may be configured to host different portions or instances of embodiments. For example, in one embodiment some elements may be implemented via one or more nodes of computer system 2300 that are distinct from those nodes implementing other elements.

In various embodiments, computer system 2300 may be a uniprocessor system including one processor 2310, or a multiprocessor system including several processors 2310 (e.g., two, four, eight, or another suitable number). Processors 2310 may be any suitable processor capable of executing instructions. For example, in various embodiments processors 2310 may be general-purpose or embedded processors implementing any of a variety of instruction set architectures (ISAs), such as the x86, PowerPC, SPARC, or MIPS ISAs, or any other suitable ISA. In multiprocessor systems, each of processors 2310 may commonly, but not necessarily, implement the same ISA.

System memory 2320 may be configured to store point cloud compression or point cloud decompression program instructions 2322 and/or sensor data accessible by processor 2310. In various embodiments, system memory 2320 may be implemented using any suitable memory technology, such as static random-access memory (SRAM), synchronous dynamic RAM (SDRAM), nonvolatile/Flash-type memory, or any other type of memory. In the illustrated embodiment, program instructions 2322 may be configured to implement an image sensor control application incorporating any of the functionality described above. In some embodiments, program instructions and/or data may be received, sent, or stored upon different types of computer-accessible media or on similar media separate from system memory 2320 or computer system 2300. While computer system 2300 is described as implementing the functionality of functional blocks of previous Figures, any of the functionality described herein may be implemented via such a computer system.

In one embodiment, I/O interface 2330 may be configured to coordinate I/O traffic between processor 2310, system memory 2320, and any peripheral devices in the device, including network interface 2340 or other peripheral interfaces, such as input/output devices 2350. In some embodiments, I/O interface 2330 may perform any necessary protocol, timing, or other data transformations to convert data signals from one component (e.g., system memory 2320) into a format suitable for use by another component (e.g., processor 2310). In some embodiments, I/O interface 2330 may include support for devices attached through various types of peripheral buses, such as a variant of the Peripheral Component Interconnect (PCI) bus standard or the Universal Serial Bus (USB) standard, for example. In some embodiments, the function of I/O interface 2330 may be split into two or more separate components, such as a north bridge and a south bridge, for example. Also, in some embodiments some or all of the functionality of I/O interface 2330, such as an interface to system memory 2320, may be incorporated directly into processor 2310.

Network interface 2340 may be configured to allow data to be exchanged between computer system 2300 and other devices attached to a network 2385 (e.g., carrier or agent devices) or between nodes of computer system 2300. Network 2385 may in various embodiments include one or more networks including but not limited to Local Area Networks (LANs) (e.g., an Ethernet or corporate network), Wide Area Networks (WANs)

(e.g., the Internet), wireless data networks, some other electronic data network, or some combination thereof. In various embodiments, network interface 2340 may support communication via wired or wireless general data networks, such as any suitable type of Ethernet network, for example; via telecommunications/telephony networks such as analog voice networks or digital fiber communications networks; via storage area networks such as Fibre Channel SANs, or via any other suitable type of network and/or protocol.

Input/output devices 2350 may, in some embodiments, include one or more display terminals, keyboards, keypads, touchpads, scanning devices, voice or optical recognition devices, or any other devices suitable for entering or accessing data by one or more computer systems 2300. Multiple input/output devices 2350 may be present in computer system 2300 or may be distributed on various nodes of computer system 2300. In some embodiments, similar input/output devices may be separate from computer system 2300 and may interact with one or more nodes of computer system 2300 through a wired or wireless connection, such as over network interface 2340.

As shown in FIG. 23, memory 2320 may include program instructions 2322, which may be processor-executable to implement any element or action described above. In one embodiment, the program instructions may implement the methods described above. In other embodiments, different elements and data may be included. Note that data may include any data or information described above.

Those skilled in the art will appreciate that computer system 2300 is merely illustrative and is not intended to limit the scope of embodiments. In particular, the computer system and devices may include any combination of hardware or software that can perform the indicated functions, including computers, network devices, Internet appliances, PDAs, wireless phones, pagers, etc. Computer system 2300 may also be connected to other devices that are not illustrated, or instead may operate as a stand-alone system. In addition, the functionality provided by the illustrated components may in some embodiments be combined in fewer components or distributed in additional components. Similarly, in some embodiments, the functionality of some of the illustrated components may not be provided and/or other additional functionality may be available.

Those skilled in the art will also appreciate that, while various items are illustrated as being stored in memory or on storage while being used, these items or portions of them may be transferred between memory and other storage devices for purposes of memory management and data integrity. Alternatively, in other embodiments some or all of the software components may execute in memory on another device and communicate with the illustrated computer system via inter-computer communication. Some or all of the system components or data structures may also be stored (e.g., as instructions or structured data) on a computer-accessible medium or a portable article to be read by an appropriate drive, various examples of which are described above. In some embodiments, instructions stored on a computer-accessible medium separate from computer system 1800 may be transmitted to computer system 1800 via transmission media or signals such as electrical, electromagnetic, or digital signals, conveyed via a communication medium such as a network and/or a wireless link. Various embodiments may further include receiving, sending, or storing instructions and/or data implemented in accordance with the foregoing description upon a computer-accessible medium. Generally speaking, a computer-accessible medium may include a non-transitory, computer-readable storage medium or memory medium such as magnetic or optical media, e.g., disk or DVD/CD-ROM, volatile or non-volatile media such as RAM (e.g., SDRAM, DDR, RDRAM, SRAM, etc.), ROM, etc. In some embodiments, a computer-accessible medium may include transmission media or signals such as electrical, electromagnetic, or digital signals, conveyed via a communication medium such as network and/or a wireless link.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

## Claims

1. A non-transitory, computer-readable, storage medium storing program instructions that, when executed using one or more computing devices, cause the one or more computing devices to:

   receive information for a compressed version of a dynamic mesh, the information comprising:

   vertices displacement and connectivity information for a first point in time frame of the dynamic mesh;
   prediction information for predicting vertices displacement information for another point-in-time frame;

   determine 3-dimensional, 3D, vertex values for a first version of the dynamic mesh corresponding to the first point-in-time frame using the vertices displacement and connectivity information for the first point-in-time frame; and determine 3D vertex values for another version of the dynamic mesh corresponding to the other point-in-time frame, wherein said determining comprises:
   predicting, for one or more vertices of the other version of the dynamic mesh, using the prediction information and the previously determined 3D vertex values from a version of the dynamic mesh corresponding to the first frame, vertices displacement information for the other version of the dynamic mesh corresponding to the other point-in-time frame.

2. The non-transitory, computer-readable, storage medium of claim 1, wherein the received information further comprises:
   one or more two-dimensional, 2D, video-encoded frames comprising residual values to be applied to predicted vertices location information, predicted using the prediction information, and
   wherein said determining further comprises:
   applying residual values included in the 2D video-encoded frame to the predicted vertices displacement information to generate the 3D vertex values for the other version of the dynamic mesh corresponding to the other point-in-time frame.

3. The non-transitory, computer-readable, storage medium of claim 1, wherein the received information for the compressed version of a dynamic mesh is organized into:

   a base mesh sub-bitstream for reconstructing a base mesh for the dynamic mesh; and
   a displacement sub-bitstream that comprises the vertices displacement information to be applied at subdivision points of the base mesh to reconstruct the dynamic mesh.

4. The non-transitory, computer-readable, storage medium of claim 3 wherein the program instructions, when executed using the one or more computing devices, further cause the one or more computing devices to:

identify a sub-mesh of a plurality of sub-meshes that is signaled in the atlas sub-bitstream but that is not signaled in the base mesh sub-bitstream; and
based on the said identifying:

use an empty sub-mesh as a placeholder in the base mesh sub-bitstream, wherein the empty base mesh is used to correspond to the sub-mesh referenced in the atlas sub-bitstream; or
remove the sub-mesh referenced in the atlas sub-bitstream from the atlas sub-bitstream.

5. The non-transitory, computer-readable, storage medium of any of claims 1 to 4, wherein the received information for the compressed version of a dynamic mesh comprises:

a base mesh sub-bitstream for reconstructing a base mesh for the dynamic mesh;
a displacement sub-bitstream that comprises displacement information to be applied at subdivision points of the base mesh to reconstruct the dynamic mesh, wherein the displacement information of the displacement sub-bitstream is signaled using patches comprising displacement values packed into video-encoded two-dimensional, (2D, video image frames; and
an atlas sub-bitstream for reconstructing atlas information for the dynamic mesh, wherein the atlas information maps the displacements of the displacement sub-bitstream to subdivision location of the base mesh,
wherein respective vertices counts are signaled for respective ones of the patches packed into the 2D video image frames; and

wherein to determine the 3D vertex values for the other version of the dynamic mesh corresponding to the other point-in-time frame, the program instructions, when executed using the one or more computing devices, further cause the one or more computing devices to:
use the vertices counts for the patches and the atlas information to map displacement information from the displacement sub-bitstream to vertices locations of the reconstructed base mesh signaled in the base mesh sub-bitstream.

6. The non-transitory, computer-readable, storage medium of claim 5, wherein:

a patch data unit is used to signal information for locating a given one of the patches in the 2D video image frame, and
a flag is used to indicate one or more portions of the patch data unit are omitted from being signaled, wherein default values or values signaled in a frame parameter set or sequence parameter set are used in a reconstruction process instead of using the omitted one or more portions.

7. A method comprising:

receiving information for a compressed version of a dynamic mesh, the information comprising:

vertices displacement and connectivity information for a first point in time frame of the dynamic mesh;
prediction information for predicting vertices displacement information for another point-in-time frame;

determining 3-dimensional, 3D, vertex values for a first version of the dynamic mesh corresponding to the first point-in-time frame using the vertices displacement and connectivity information for the first point-in-time frame; and
determining 3D vertex values for another version of the dynamic mesh corresponding to the other point-in-time frame, wherein said determining comprises:
predicting, for one or more vertices of the other version of the dynamic mesh, using the prediction information and the previously determined 3D vertex values from a version of the dynamic mesh corresponding to the first frame, vertices displacement information for the other version of the dynamic mesh corresponding to the other point-in-time frame.

8. The method of claim 7, wherein the received information comprises:

a base mesh sub-bitstream for reconstructing a base mesh for the dynamic mesh;
a displacement sub-bitstream that comprises displacement information to be applied at subdivision points of the base mesh to reconstruct the dynamic mesh; and
an atlas sub-bitstream for reconstructing atlas information for the dynamic mesh; and

wherein the method further comprises:

identifying a sub-mesh of a plurality of sub-meshes that is signaled in the atlas sub-bitstream but that is not signaled in the base mesh sub-bitstream; and based on the said identifying:

using an empty sub-mesh as a placeholder in the base mesh sub-bitstream, wherein the empty base mesh is used to correspond to the sub-mesh referenced in the atlas sub-bitstream; or
removing the sub-mesh referenced in the atlas sub-bitstream from the atlas sub-bitstream; and

determining 3-dimensional (3D) vertex values for the dynamic mesh using the reconstructed base mesh and displacements applied at vertices location of the reconstructed base mesh, wherein the atlas information is used to map displacement information from the displacement sub-bitstream to vertices locations of a base mesh signaled in the base mesh sub-bitstream.

9.  The method of claim 8, wherein the received information further comprises:
one or more two-dimensional (2D) video-encoded frames comprising residual values to be applied to predicted vertices location information, predicted using the prediction information, and wherein said determining 3D vertex values for the other version of the dynamic mesh further comprises:
applying residual values included in the 2D video-encoded frame to the predicted vertices displacement information to generate the 3D vertex values for the other version of the dynamic mesh corresponding to the other point-in-time frame.

10.  The method of any of claims 7 to 9, wherein the received information comprises:

a base mesh sub-bitstream for reconstructing a base mesh for the dynamic mesh;
a displacement sub-bitstream that comprises displacement information to be applied at subdivision points of the base mesh to reconstruct the dynamic mesh, wherein the displacement information of the displacement sub-bitstream is signaled using patches comprising displacement values packed into video-encoded two-dimensional, 2D, video image frames; and
an atlas sub-bitstream for reconstructing atlas information for the dynamic mesh, wherein the atlas information maps the displacements of the displacement sub-bitstream to subdivision location of the base mesh,
wherein respective vertices counts are signaled for respective ones of the patches packed into the 2D video image frames, and
wherein said determining the 3D vertex values for the dynamic mesh using the reconstructed base mesh and the displacements applied at the vertices location of the reconstructed base mesh comprises:
using the vertices counts for the patches and the atlas information to map displacement information from the displacement sub-bitstream to vertices locations of the reconstructed base mesh signaled in the base mesh sub-bitstream.

11.  The method of claim 10, wherein:

a patch data unit is used to signal information for locating a given one of the patches in the 2D video image frame, and
a flag is used to indicate one or more portions of the patch data unit are omitted from being signaled, wherein default values or values signaled in a frame parameter set or sequence parameter set are used in a reconstruction process instead of using the omitted one or more portions.

12.  The method of any of claims 7 to 9, wherein the received information for the compressed version of the dynamic mesh comprises:

vertices location and connectivity information for a first frame;
vertices location and connectivity information for one or more additional frames; and
multi-frame prediction information for predicting vertices location information for another frame using multiple preceding frames and an indication of vertices connectivity information to be used for the other frame; and

wherein said determining the 3D vertex values for the dynamic mesh using the reconstructed base mesh and the displacements applied at the vertices location of the reconstructed base mesh comprises:

determining 3D vertex values for a first version of the dynamic mesh corresponding to the first frame using the vertices location and connectivity information for the first frame;
determining 3D vertex values for one or more additional versions of the dynamic mesh corresponding to the one or more additional frames using the vertices location and connectivity information for the one or more additional frames; and
determining 3D vertex values for another version of the dynamic mesh corresponding to the other frame, wherein said determination comprises:
predicting, for one or more vertices of the other version of the dynamic mesh, one or more vertices locations using previously determined 3D vertex values from at least two different ones of the dynamic mesh corresponding to the first frame and the one or more additional frames.

13. The method of claim 12, further comprising:
determining one or more texture coordinate values for the other version of the dynamic mesh corresponding to the other frame, wherein said determining comprises:
predicting, for one or more texture coordinates of the other version of the dynamic mesh, the one or more texture coordinate values using texture coordinate values from at least two different versions of the dynamic mesh corresponding to the first frame and the one or more additional frames.

14. A device, comprising:

a memory storing program instructions; and
one or more processors, wherein the program instructions, when executed using the one or more processors, cause the one or more processors to:

receive information for a compressed version of a dynamic mesh, the information comprising:

vertices displacement and connectivity information for a first point in time frame of the dynamic mesh;
prediction information for predicting vertices displacement information for another point-in-time frame;

determine 3-dimensional, 3D, vertex values for a first version of the dynamic mesh corresponding to the first point-in-time frame using the vertices displacement and connectivity information for the first point-in-time frame; and
determine 3D vertex values for another version of the dynamic mesh corresponding to the other point-in-time frame, wherein said determining comprises:
predicting, for one or more vertices of the other version of the dynamic mesh, using the prediction information and the previously determined 3D vertex values from a version of the dynamic mesh corresponding to the first frame, vertices displacement information for the other version of the dynamic mesh corresponding to the other point-in-time frame.

15. The device of claim 14, wherein the received information comprises:

a base mesh sub-bitstream for reconstructing a base mesh for the dynamic mesh;
a displacement sub-bitstream that comprises displacement information to be applied at subdivision points of the base mesh to reconstruct the dynamic mesh; and
an atlas sub-bitstream for reconstructing atlas information for the dynamic mesh; and
wherein the program instructions, when executed using the one or more processors, cause the one or more processors to perform:
identifying a sub-mesh of a plurality of sub-meshes that is signaled in the atlas sub-bitstream but that is not signaled in the base mesh sub-bitstream; and based on the said identifying:

using an empty sub-mesh as a placeholder in the base mesh sub-bitstream, wherein the empty base mesh is used to correspond to the sub-mesh referenced in the atlas sub-bitstream; or
removing the sub-mesh referenced in the atlas sub-bitstream from the atlas sub-bitstream; and

determining 3-dimensional (3D) vertex values for the dynamic mesh using the reconstructed base mesh and displacements applied at vertices location of the reconstructed base mesh, wherein the atlas information is used to map displacement information from the displacement sub-bitstream to vertices locations of a base mesh signaled in the base mesh sub-bitstream.

Mesh with texture

Connectivity

Geometry

Texture image

Texture Connectivity

Coordinate 1;

Coordinate 2;

...

Texture Coordinates

*FIG. 1*

| # link to material library | newmtl material0000 |
|---|---|
| mtllib  person_00000001.mtl | Ka 1.0 1.0 1.0 |
| # Positions (e.g. Geometry Information) | Kd 1.0 1.0 1.0 |
| v 64.062500 1237.739990 51.757801 | Ks 1.0 1.0 1.0 |
| v 59.570301 1236.819946 54.899700 | map_Kd |
| ... | # link to a 2D image |
| v -104.573997 434.458008 175.684006 | person_00000001.png |
| v 98.071899 744.414978 178.248001 | |
| v 96.240196 781.739990 178.076004 | |
| v 95.393799 791.934998 178.188004 | |
| # Texture coordinates | |
| vt 0.897381 0.740830 | |
| vt 0.899059 0.741542 | |
| ... | |
| vt 0.548180 0.679136 | |
| # link to material | |
| usemtl material0000 | |
| # connectivity for geometry and texture | |
| f 1/1 2/2 3/3 | |
| f 4/7 1/1 3/9 | |
| ... | |
| f 4318/4318 3539/3539 16453/16453 | |
| person_00000001.obj | person_00000001.mtl |
| Example of a textured mesh stored in OBJ format. | |
| | |

FIG. 2

**FIG. 3**

**Multiple Reference Frame Inter-prediction**

Reference Frame 0

Reference Frame 1

Frame predicted using Reference Frame 0 and Reference Frame 1

Geometry G(i)

Geometry G(i)

Geometry G(i)

# Positions (e.g. Geometry Information)

(vertex[0][0], vertex[0][1], vertex[0][2]),
(vertex[1][0], vertex[1][1], vertex[1][2]),
(vertex[2][0], vertex[2][1], vertex[2][2])
...
(vertex[n][0], vertex[n][1], vertex[n][2])]

# Positions (e.g. Geometry Information)

(vertex[0][0], vertex[0][1], vertex[0][2]),
(vertex[1][0], vertex[1][1], vertex[1][2]),
(vertex[2][0], vertex[2][1], vertex[2][2])
...
(vertex[n][0], vertex[n][1], vertex[n][2])]

# Positions (e.g. Geometry Information)

mesh[i].vertex[v][0] = F(mesh[refer0].vertex[refV0][v][0],
          mesh[refer1].vertex[refV1][v][0]) +
                         residual[v][0]
mesh[i].vertex[v][1] = F(mesh[refer0].vertex[refV0][v][1],
          mesh[refer1].vertex[refV1][v][1]) +
                         residual[v][1]
mesh[i].vertex[v][2] = F(mesh[refer0].vertex[refV0][v][2],
          mesh[refer1].vertex[refV1][v][2]) +
                         residual[v][2]

EP 4 636 698 A1

**Single Reference Frame Inter-prediction**

*FIG. 4*

EP 4 636 698 A1

*Reference Frame 0*

*Frame predicted using multiple vertices from Reference Frame 0*

*Geometry G(i)*

*Geometry G(i)*

```
# Positions (e.g. Geometry Information)

(vertex[0][0], vertex[0][1], vertex[0][2]),
(vertex[1][0], vertex[1][1], vertex[1][2]),
(vertex[2][0], vertex[2][1], vertex[2][2])
...
(vertex[n][0], vertex[n][1], vertex[n][2])]
```

```
# Positions (e.g. Geometry Information)
mesh[i].vertex[v][0] = F(mesh[refer0].vertex[refV0][v][0],
                         mesh[refer0].vertex[refV1][v][0]) +
                                              residual[v][0]
mesh[i].vertex[v][1] = F(mesh[refer0].vertex[refV0][v][1],
                         mesh[refer0].vertex[refV1][v][1]) +
                                              residual[v][1]
mesh[i].vertex[v][2] = F(mesh[refer0].vertex[refV0][v][2],
                         mesh[refer0].vertex[refV1][v][2]) +
                                              residual[v][2]
```

## Multiple Reference Frame Inter-prediction Using a Hypothetical Reference Frame

**Reference Frame 1**

# Positions (e.g. Geometry Information)

*(vertex[0][0], vertex[0][1], vertex[0][2]),*
*(vertex[1][0], vertex[1][1], vertex[1][2]),*
*(vertex[2][0], vertex[2][1], vertex[2][2])*
*...*
*(vertex[n][0], vertex[n][1], vertex[n][2])]*

**Hypothetical Reference Frame**
**(New Frame generated using Reference Frame 0 and reference Frame 1)**

# Positions (e.g. Geometry Information)

referMesh.vertex[v][0] = F'(mesh[refer0].vertex[refV0][0], mesh[refer1].vertex[refV1][0])

referMesh.vertex[v][1] = F'(mesh[refer0].vertex[refV0][1], mesh[refer1].vertex[refV1][1])

referMesh.vertex[v][2] = F'(mesh[refer0].vertex[refV0][2], mesh[refer1].vertex[refV1][2]).

**Frame predicted using Reference Frame 1 and Hypothetical Reference Frame**

# Positions (e.g. Geometry Information)

mesh[i].vertex[v][0] = F(mesh[refer1].vertex[refV0][0], referMesh.vertex[refV][0]) + residual[0]

mesh[i].vertex[v][1] = F(mesh[refer1].vertex[refV0][1], referMesh.vertex[refV][1]) + residual[1]

mesh[i].vertex[v][2] = F(mesh[refer1].vertex[refV0][2], referMesh.vertex[refV][2]) + residual[2]

*FIG. 5*

EP 4 636 698 A1

**Non-sequential/ Out-of-order Multiple Reference Frame Inter-prediction**

Reference Frame X

Reference Frame Y

Frame predicted using Reference Frame X and Reference Frame Y

\# Positions (e.g. Geometry Information)
v $V_{1x}, V_{1y}, V_{1z}$
v $V_{2x}, V_{2y}, V_{2z}$
v $V_{3x}, V_{3y}, V_{3z}$
...
v $V_{nx}, V_{ny}, V_{nz}$

\# Positions (e.g. Geometry Information)
v $V_{1x}', V_{1y}', V_{1z}'$
v $V_{2x}', V_{2y}', V_{2z}'$
v $V_{3x}', V_{3y}', V_{3z}'$
...
v $V_{nx}', V_{ny}', V_{nz}'$

\# Positions (e.g. Geometry Information)
mesh[i].vertex[v][0] = F(mesh[referX].vertex[refV0][v][0],
                         mesh[referY].vertex[refV1][v][0]) +
                                                residual[v][0]
mesh[i].vertex[v][1] = F(mesh[referX].vertex[refV0][v][1],
                         mesh[referY].vertex[refV1][v][1]) +
                                                residual[v][1]
mesh[i].vertex[v][2] = F(mesh[referX].vertex[refV0][v][2],
                         mesh[referY].vertex[refV1][v][2]) +
                                                residual[v][2]

*FIG. 6*

EP 4 636 698 A1

## Multiple Reference Frame Inter-prediction for Texture Coordinates

**Reference Frame 1**

Texture
image A(i)

```
# Texture coordinates
vt Vt1u, Vt1v
vt Vt2u, Vt2v
...
vt Vtnu, Vtnv
```

**Hypothetical Reference Frame
(New Frame generated using
Reference Frame 0 and reference
Frame 1)**

Texture
image A(i)

```
# Texture coordinates

referMesh.texCoords[t][0]= H'(mesh[refer0].texCoords
        [refT0][0], mesh[refer1].texCoords[refT1][0])
referMesh.texCoords[t][1] = H'(mesh[refer0].texCoords
        [refT0][1], mesh[refer1].texCoords[refT1][1])
```

**Current Frame**

Texture
image A(i)

```
# Texture coordinates

mesh[i].texCoords [v][0] = H(mesh[refer1].texCoords[refT1[t][0]],
        mesh[referMesh].texCoords[refT[t][0]])
mesh[i].texCoords [v][1] = H(mesh[refer1]. texCoords[refT1[t][1]],
        mesh[referMesh].texCoords[refT[t][1]])
```

*FIG. 7*

**Multiple Reference Frame Inter-prediction for**
**Connectivity Information**

| Reference Frame 1 | Reference Frame 4 | Current Frame |
|---|---|---|

# connectivity for geometry

f 1 2 3

f 4 1 3

...

f $V_i$ $V_j$ $V_k$

# connectivity for texture

f 1 2 3

f 7 1 9

...

f $V_l$ $V_m$ $V_n$

# connectivity for geometry

f 1 2 3

f 4 1 3

...

f $V_a$ $V_b$ $V_c$

# connectivity for texture

f 1 2 3

f 7 1 9

...

f $V_e$ $V_f$ $V_g$

# connectivity for geometry

refer1


# connectivity for texture

refer4

Encoder frame
includes indication of
selected reference
frame connectivity to
apply (e.g., Reference
Frame 1 and
Reference Frame 4)

*FIG. 8*

EP 4 636 698 A1

Offset to adjust from
relation to Origin to actual
3D space

(offsetU[0], offsetV[0], offsetD[0])

(offsetU[1], offsetV[1], offsetD[1])

Relocated
to origin to
conserve
bit depth

Location
in 3D
space

v

Origin

u

d

(offsetU[2], offsetV[2], offsetD[2])

FIG. 9

Only the residuals of the vertices are signaled

Coded with static mesh codec

Mesh with different types of prediction

Residuals of the uv coordinates signaled but the connectivity is the same as the reference frame

Texture image A(i) for Reference Frame

uv coordinates of the current frame are not changed from the reference frame

uv coordinates of the current frame are shifted and rotated from the reference frame

uv coordinates of the current frame are shifted from the reference frame

Texture image A(i) for Current Frame

*FIG. 10*

gFrame[y][x]

Derivation process
(atlas_frame_tile_information, 7.5)

TileOffsetX, TileOffsetY
TileWidth, TileHeight

TileOffsetXAtt, TileOffsetYAtt
TileWidthAtt, TileHeightAtt

Geometry video sub-bitstream

aFrame[attIdx][y][x]

Attribute video sub-bitstream

```
atlasTileLayerRbsp(){ 37 bytes
  atlasTileHeader(){
    AtlasFrameParameterSetId ................ = 0    ue(v)
    AtlasAdaptationParameterSetId ........... = 0    ue(v)
    AtlasTileHeaderId ....................... = 0    u(1)
    Type .................................... = 1    ue(v)
    AtlasFrmOrderCntLsb ..................... = 0    u(8)
    RefAtlasFrameListSpsFlag ................ = 1    u(1)
    PosMinDQuantizer ........................ = 0    u(5)
    byteAlignment(){
      one ................................... = 1    u(1)
      zero .................................. = 0    u(1)
      zero .................................. = 0    u(1)
      zero .................................. = 0    u(1)
    } //~byteAlignment
  } //~atlasTileHeader
  atlasTileDataUnit(I_TILE)(){
    PatchMode ............................. = 0    ue(v)
    patchDataUnit(){
      PduSubmeshId .......................... = 0    u(2)
      PduVertexCountMinus1 ................. = 10898 ue(v)
      PduFaceCountMinus1 ................... = 20607 ue(v)
      PduGeometry2dPosX ................... = 0    ue(v)
      PduGeometry2dPosY ................... = 0    ue(v)
      PduGeometry2dSizeXMinus1 ........... = 3    ue(v)
      PduGeometry2dSizeYMinus1 ........... = 1    ue(v)
      PduParametersOverrideFlag ........... = 0    u(1)
      PduDisplacementCoordinateSystem ... = 1    u(1)
      PduAttributes2dPosX .................. = 0    ue(v)
      PduAttributes2dPosY .................. = 0    ue(v)
      PduAttributes2dSizeXMinus1 .......... = 511  ue(v)
      PduAttributes2dSizeYMinus1 .......... = 511  ue(v)
    PatchMode ............................. = 0    ue(v)
    patchDataUnit(){
      PduSubmeshId ......................... = 2    u(2)
      PduVertexCountMinus1 ................. = 19637 ue(v)
      PduFaceCountMinus1 ................... = 38207 ue(v)
      PduGeometry2dPosX ................... = 0    ue(v)
      PduGeometry2dPosY ................... = 2    ue(v)
      PduGeometry2dSizeXMinus1 ........... = 3    ue(v)
      PduGeometry2dSizeYMinus1 ........... = 1    ue(v)
      PduParametersOverrideFlag ........... = 0    u(1)
      PduDisplacementCoordinateSystem ..... = 1    u(1)
      PduAttributes2dPosX .................. = 0    ue(v)
      PduAttributes2dPosY .................. = 512  ue(v)
      PduAttributes2dSizeXMinus1 .......... = 511  ue(v)
      PduAttributes2dSizeYMinus1 .......... = 511  ue(v)
      PatchMode ............................. = 14   ue(v)
    } //~atlasTileDataUnit(I_TILE)
    rbspTrailingBits(){
      one ................................... = 1    u(1)
      zero .................................. = 0    u(1)
      zero .................................. = 0    u(1)
    } //~rbspTrailingBits
} //~atlasTileLayerRbsp
```

```
atlasTileLayerRbsp(){ 21 bytes
  atlasTileHeader(){
    AtlasFrameParameterSetId ........... = 0    ue(v)
    AtlasAdaptationParameterSetId ....... = 0    ue(v)
    AtlasTileHeaderId ................... = 1    u(1)
    Type ................................ = 1    ue(v)
    AtlasFrmOrderCntLsb ................. = 0    u(8)
    RefAtlasFrameListSpsFlag ............ = 1    u(1)
    PosMinDQuantizer .................... = 0    u(5)
    byteAlignment(){
      one ................................. = 1    u(1)
      zero ................................ = 0    u(1)
      zero ................................ = 0    u(1)
      zero ................................ = 0    u(1)
    } //~byteAlignment
  } //~atlasTileHeader
  atlasTileDataUnit(I_TILE)(){
    PatchMode ........................... = 0    ue(v)
    patchDataUnit(){
      PduSubmeshId ...................... = 1    u(2)
      PduVertexCountMinus1 .............. = 13894 ue(v)
      PduFaceCountMinus1 ................ = 26047 ue(v)
      PduGeometry2dPosX ................ = 0    ue(v)
      PduGeometry2dPosY ................ = 0    ue(v)
      PduGeometry2dSizeXMinus1 ......... = 3    ue(v)
      PduGeometry2dSizeYMinus1 ......... = 1    ue(v)
      PduParametersOverrideFlag ........ = 0    u(1)
      PduDisplacementCoordinateSystem .. = 1    u(1)
      PduAttributes2dPosX ............... = 0    ue(v)
      PduAttributes2dPosY ............... = 0    ue(v)
      PduAttributes2dSizeXMinus1 ....... = 511  ue(v)
      PduAttributes2dSizeYMinus1 ....... = 1023 ue(v)
      PatchMode ......................... = 14   ue(v)
    } //~atlasTileDataUnit(I_TILE)
    rbspTrailingBits(){
      one ............................... = 1    u(1)
      zero .............................. = 0    u(1)
      zero .............................. = 0    u(1)
      zero .............................. = 0    u(1)
      zero .............................. = 0    u(1)
      zero .............................. = 0    u(1)
      zero .............................. = 0    u(1)
      zero .............................. = 0    u(1)
    } //~rbspTrailingBits
  } //~atlasTileLayerRbsp
```

Atlas data sub-bitstream

*FIG. 11A*

*FIG. 11B*

gFrame[y][x]

Derivation process
(atlas_frame_tile_information, 7.5)

TileOffsetX, TileOffsetY
TileWidth, TileHeight

TileOffsetXAtt, TileOffsetXAtt
TileWidthAtt, TileHeightAtt

*Geometry video sub-bitstream*

aFrame[attIdx][y][x]

*Attribute video sub-bitstream*

```
atlasTileLayerRbsp(){ 37 bytes
 atlasTileHeader(){
  AtlasFrameParameterSetId ................ = 0   ue(v)
  AtlasAdaptationParameterSetId ........... = 0   ue(v)
  AtlasTileHeaderId ....................... = 0   u(1)
  Type .................................... = 1   ue(v)
  AtlasFrmOrderCntLsb ..................... = 0   u(8)
  RefAtlasFrameListSpsFlag ................ = 1   u(1)
  PosMinDQuantizer ........................ = 0   u(5)
  byteAlignment(){
   one .................................... = 1   u(1)
   zero ................................... = 0   u(1)
   zero ................................... = 0   u(1)
   zero ................................... = 0   u(1)
  } //~byteAlignment
 } //~atlasTileHeader
 atlasTileDataUnit(I_TILE)(){
  PatchMode .............................. = 0   ue(v)
  patchDataUnit(){
   PduSubmeshId .......................... = 0   u(2)
   PduVertexCountMinus1 .................. = 10898 ue(v)
   PduFaceCountMinus1 .................... = 20607 ue(v)
   PduGeometry2dPosX [0] ................. = 0   ue(v)
   PduGeometry2dPosY [0] ................. = 0   ue(v)
   PduGeometry2dSizeXMinus1 [0] .......... = 3   ue(v)
   PduGeometry2dSizeYMinus1 [0] .......... = 1   ue(v)
   PduGeometry2dPosX [1] ................. = 0   ue(v)
   PduGeometry2dPosY [1] ................. = 2   ue(v)
   PduGeometry2dSizeXMinus1 [1] .......... = 3   ue(v)
   PduGeometry2dSizeYMinus1 [1] .......... = 1   ue(v)
   PduParametersOverrideFlag ............. = 0   u(1)
   PduDisplacementCoordinateSystem ....... = 1   u(1)
   PduAttributes2dPosX[0] ................ = 0   ue(v)
   PduAttributes2dPosY [0] ............... = 512   ue(v)
   PduAttributes2dSizeXMinus1 [0] ........ = 511   ue(v)
   PduAttributes2dSizeYMinus1 [0] ........ = 511   ue(v)
   PduAttributes2dPosX [1] ............... = 0   ue(v)
   PduAttributes2dPosY [1] ............... = 0   ue(v)
   PduAttributes2dSizeXMinus1 [1] ........ = 511   ue(v)
   PduAttributes2dSizeYMinus1 [1] ........ = 511   ue(v)
   PatchMode ............................. = 14   ue(v)
  } //~atlasTileDataUnit(I_TILE)
  rbspTrailingBits(){
   one ................................... = 1   u(1)
   zero .................................. = 0   u(1)
   zero .................................. = 0   u(1)
  } //~rbspTrailingBits
 } //~atlasTileLayerRbsp
```

```
atlasTileLayerRbsp(){ 21 bytes
 atlasTileHeader(){
  AtlasFrameParameterSetId ........... = 0    ue(v)
  AtlasAdaptationParameterSetId ....... = 0   ue(v)
  AtlasTileHeaderId ................... = 1   u(1)
  Type ................................ = 1   ue(v)
  AtlasFrmOrderCntLsb ................. = 0   u(8)
  RefAtlasFrameListSpsFlag ............ = 1   u(1)
  PosMinDQuantizer .................... = 0   u(5)
  byteAlignment(){
   one ................................ = 1   u(1)
   zero ............................... = 0   u(1)
   zero ............................... = 0   u(1)
   zero ............................... = 0   u(1)
  } //~byteAlignment
 } //~atlasTileHeader
 atlasTileDataUnit(I_TILE)(){
  PatchMode .......................... = 0   ue(v)
  patchDataUnit(){
   PduSubmeshId ...................... = 1   u(2)
   PduVertexCountMinus1 .............. = 13894 ue(v)
   PduFaceCountMinus1 ................ = 26047 ue(v)
   PduGeometry2dPosX [0] ............. = 0   ue(v)
   PduGeometry2dPosY [0] ............. = 0   ue(v)
   PduGeometry2dSizeXMinus1[0] ....... = 3   ue(v)
   PduGeometry2dSizeYMinus1[0] ....... = 1   ue(v)
   PduParametersOverrideFlag ......... = 0   u(1)
   PduDisplacementCoordinateSystem ... = 1   u(1)
   PduAttributes2dPosX[0] ............ = 0   ue(v)
   PduAttributes2dPosY[0] ............ = 0   ue(v)
   PduAttributes2dSizeXMinus1[0] ....... = 511  ue(v)
   PduAttributes2dSizeYMinus1 [0]....... = 1023 ue(v)
   PatchMode ......................... = 14   ue(v)
  } //~atlasTileDataUnit(I_TILE)
  rbspTrailingBits(){
   one ............................... = 1   u(1)
   zero .............................. = 0   u(1)
   zero .............................. = 0   u(1)
   zero .............................. = 0   u(1)
   zero .............................. = 0   u(1)
   zero .............................. = 0   u(1)
   zero .............................. = 0   u(1)
   zero .............................. = 0   u(1)
  } //~rbspTrailingBits
 } //~atlasTileLayerRbsp
```

*Atlas data sub-bitstream*

*FIG. 12*

submesh0
...
vt(0.00, 0.00)
vt(1.00, 1.00)

submesh1
...
vt(0.00, 0.00)
vt(1.00, 1.00)

submesh2
...
vt(0.00, 0.00)
vt(1.00, 1.00)

*asve_attribute_subtexture_enabled_flag=true*

submesh0
...
vt(0.00, 0.50)
vt(0.5, 1.00)

submesh1
...
vt(0.00, 0.00)
vt(0.5, 0.5)

submesh2
...
vt(0.50, 0.00)
vt(1.00, 1.00)

*asve_attribute_subtexture_enabled_flag=false*

submesh0
...
vt(0.00, 0.50)
vt(1.00, 1.00)

submesh1
...
vt(0.00, 0.00)
vt(0.50, 0.50)

submesh2
...
vt(0.00, 0.00)
vt(1.00, 1.00)

*asve_attribute_subtexture_enabled_flag=false*

*FIG. 13*

FIG. 14

*FIG. 15*

EP 4 636 698 A1

*FIG. 16*

EP 4 636 698 A1

**FIG. 17**

Inter Frame Decoder 1702

Reconstructed quantized base mesh

Inverse Quantization 1518

Reconstruct deformed mesh 1520 → Decode mesh

Decoded Base Mesh

Decoded displacements

Inverse Wavelet Transform 1514

Inverse Quantization 1512

Image Unpacking 1510

Reconstruction of base mesh 1706

Motion Decoder 1704

Displacement Decoder 1522

Video Decoding 1508

Atlas Decoder 1524 → Decoded Patch Data

Video Decoding 1516 → Decoded Attribute Map

Decoded displacements

Decoded Reference

Base mesh

DEMUX 1504

Compressed bitstream

FIG. 18

EP 4 636 698 A1

FIG. 19

Receive information for a dynamic mesh, the information comprising:
-displacements and vertices connectivity for a first point in time frame; and
-prediction information for use in predicting displacements and/or connectivity for another point-in-time frame
2002

Determine vertex values (e.g. by applying displacements to sub-division locations of the base mesh)
2004

Predict, for the other point-in-time frame, vertex values using the determined vertices values for the first point-in-time frame and the prediction information
2006

Apply residual values included in patches packed into 2D video encoded image frames to the predict vertex values to be used to reconstruct vertex information for the other point-in-time frame
2008

FIG. 20

Receive a bitstream representing a compressed dynamic mesh, the bitstream comprising multiple sub-bitstreams, including:
-a base-mesh sub-bitstream;
-a displacement sub-bitstream (e.g. video sub-bitstream); and
-an atlas sub-bitstream
2102

Identify a sub-mesh of a plurality of sub-meshes of the dynamic mesh that is signaled in at least the atlas sub-bitstream, but that is omitted from the base mesh sub-bitstream for at least one point-in-time frame
2104

Insert an empty base mesh for the sub mesh into the base mesh sub-bitstream for the at least one point-in-time frame to preserve point-in-time ordering of the other sub-bitstreams
2106

OR

Remove the sub-mesh referenced in the atlas sub-bitstream (but omitted from the base mesh sub-bitstream) for the at least one point-in-time frame to preserve ordering of the other sub-bitstreams
2108

Determine vertex values for the dynamic mesh for a plurality of point-in-time frames (including the at least one point-in-time frame) using the information from the base-mesh sub-bitstream, the displacement sub-bitstream; and the atlas sub-bitstream
2110

FIG. 21

Receive information for a dynamic mesh; the information comprising:
-a base-mesh sub-bitstream
-a displacement sub-bitstream signaled using 2D video encoded images comprising packed patches, each patch comprising displacement values for a plurality of vertices, and
-an atlas sub-bitstream
wherein the received information indicates a vertex count for each of the patches
2202

Determine vertex values for the dynamic mesh using the patches and the vertex counts for the patches
2204

## FIG. 22

**Computer System
2300**

Processor
2310a

Processor
2310b

· · ·

Processor
2310n

I/O Interface
2330

Memory
2320

Program
Instructions
2322

Network
Interface
2340

Input/output Device(s)
2350

Cursor
Control
Device
2360

Keyboard
2370

Display(s)
2380

Network
2385

*FIG. 23*

Europäisches Patentamt

European Patent Office

Office européen des brevets

# EUROPEAN SEARCH REPORT

**Application Number**

EP 25 17 1356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/015289 A1 (NGUYEN CANH THUONG [US] ET AL) 11 January 2024 (2024-01-11) | 1-4,6-9, 11,14,15 | INV. G06T9/00 |
| Y | * paragraph [0108] - paragraph [0110]; figures 11,12 * | 5,10,12, 13 | H04N19/52 H04N19/70 |
| Y | US 2023/290009 A1 (MAMMOU KHALED [US] ET AL) 14 September 2023 (2023-09-14) * paragraphs [0280], [0283], [0291]; figures 10 ,17, 32 * | 5,10,12, 13 | |
| A | KHALED MAMMOU (APPLE) ET AL: " [V-CG] Apple's Dynamic Mesh Coding CfP Response", 138. MPEG MEETING; 20220425 - 20220429; ONLINE; (MOTION PICTURE EXPERT GROUP OR ISO/IEC JTC1/SC29/WG11), , no. m59281 25 March 2022 (2022-03-25), XP030300723, Retrieved from the Internet: URL:https://dms.mpeg.expert/doc_end_user/documents/138_OnLine/wg11/m59281-v1-m59281.zip WG07_Apple_Response_DynamicMesh_CFP_final_dscriptors.docx [retrieved on 2022-03-25] * the whole document * | 1-14 | |
| A | MAMMOU KHALED ET AL: "Video and Subdivision based Mesh Coding", 2022 10TH EUROPEAN WORKSHOP ON VISUAL INFORMATION PROCESSING (EUVIP), IEEE, 11 September 2022 (2022-09-11), pages 1-6, XP034212156, DOI: 10.1109/EUVIP53989.2022.9922888 [retrieved on 2022-10-21] * the whole document * | 1-14 | |

**TECHNICAL FIELDS SEARCHED (IPC)**

G06T
H04N

The present search report has been drawn up for all claims

| Place of search | Date of completion of the search | Examiner |
|---|---|---|
| Munich | 11 August 2025 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 1356

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2025

| Patent document cited in search report | | Publication date | Patent family member(s) | | Publication date |
|---|---|---|---|---|---|
| US 2024015289 | A1 | 11-01-2024 | CN | 118215941 A | 18-06-2024 |
| | | | EP | 4552088 A1 | 14-05-2025 |
| | | | JP | 2025505217 A | 21-02-2025 |
| | | | KR | 20240112296 A | 18-07-2024 |
| | | | US | 2024015289 A1 | 11-01-2024 |
| | | | WO | 2024010647 A1 | 11-01-2024 |
| US 2023290009 | A1 | 14-09-2023 | CN | 118871952 A | 29-10-2024 |
| | | | CN | 118974772 A | 15-11-2024 |
| | | | EP | 4473489 A1 | 11-12-2024 |
| | | | EP | 4490701 A1 | 15-01-2025 |
| | | | US | 2023290008 A1 | 14-09-2023 |
| | | | US | 2023290009 A1 | 14-09-2023 |
| | | | US | 2023290010 A1 | 14-09-2023 |
| | | | US | 2023290011 A1 | 14-09-2023 |
| | | | US | 2023290063 A1 | 14-09-2023 |
| | | | US | 2023316655 A1 | 05-10-2023 |

**REFERENCES CITED IN THE DESCRIPTION**

**Patent documents cited in the description**

- US 63636583
- US 63636589